(19) Europäisches Patentamt / European Patent Office / Office européen des brevets

(11) **EP 3 573 411 A1**

(12) **EUROPEAN PATENT APPLICATION**
published in accordance with Art. 153(4) EPC

(43) Date of publication:
   **27.11.2019 Bulletin 2019/48**

(51) Int Cl.:
   ***H04W 74/08*** (2009.01)    ***H04W 72/04*** (2009.01)

(21) Application number: **18741852.0**

(22) Date of filing: **19.01.2018**

(86) International application number:
   **PCT/JP2018/001629**

(87) International publication number:
   **WO 2018/135631 (26.07.2018 Gazette 2018/30)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **MA MD TN**

(30) Priority: **20.01.2017   JP 2017008710**

(71) Applicants:
   • **Sharp Kabushiki Kaisha**
     **Sakai City, Osaka 590-8522 (JP)**
   • **FG INNOVATION COMPANY LIMITED**
     **Hong Kong (CN)**

(72) Inventors:
   • **SUZUKI, Shoichi**
     **Osaka 590-8522 (JP)**
   • **OUCHI, Wataru**
     **Osaka 590-8522 (JP)**
   • **YOSHIMURA, Tomoki**
     **Osaka 590-8522 (JP)**
   • **LIU, Liqing**
     **Osaka 590-8522 (JP)**

(74) Representative: **Müller Hoffmann & Partner
   Patentanwälte mbB
   St.-Martin-Strasse 58
   81541 München (DE)**

(54) **TERMINAL DEVICE, BASE STATION DEVICE, COMMUNICATIONS METHOD, AND INTEGRATED CIRCUIT**

(57)   A terminal apparatus includes: a higher layer processing unit configured to control a step-random access procedure; and a transmitter configured to transmit, as a first step of the 2 step-random access procedure, a random access preamble and data, in which the data include information relating to the random access preamble, and the information relating to the random access preamble includes some or all of following information A to information C: Information A for indicating an index of the random access preamble, Information B for indicating a resource for transmission of the random access preamble, and Information C relating to a sequence of the random access preamble.

FIG. 4

**Description**

Technical Field

The present invention relates to a terminal apparatus, a base station apparatus, a communication method, and an integrated circuit.

This application claims priority based on JP 2017-008710 filed on January 20, 2017, the contents of which are incorporated herein by reference.

Background Art

A radio access method and a radio network for cellular mobile communications (hereinafter, referred to as "Long Term Evolution (LTE: Registered Trademark)", or "Evolved Universal Terrestrial Radio Access (EUTRA)") have been studied in the 3rd Generation Partnership Project (3GPP) (NPLs 1, 2, 3, 4, and 5). Further, in 3GPP, a new radio access method (hereinafter referred to as "New Radio (NR)") is being studied. In LTE, a base station apparatus is also referred to as an evolved NodeB (eNodeB). In NR, the base station apparatus is also referred to as gNodeB. In LTE, and in NR, a terminal apparatus is also referred to as a User Equipment (UE). LTE, as well as NR, is a cellular communication system in which multiple areas are deployed in a cellular structure, with each of the multiple areas being covered by a base station apparatus. A single base station apparatus may manage a plurality of cells.

In NPL 6, it has been proposed to discuss a technique for reducing latency and/or overhead of an initial access procedure and a random access procedure (NPL 6).

Citation List

Non Patent Literature

NPL 1: "3GPP TS 36.211 V13.0.0 (2015-12)", 6th January, 2016.
NPL 2: "3GPP TS 36.212 V13.0.0 (2015-12)", 6th January, 2016.
NPL 3: "3GPP TS 36.213 V13.0.0 (2015-12)", 6th January, 2016.
NPL 4: "3GPP TS 36.321 V13.0.0 (2015-12)", 14th January, 2016.
NPL 5: "3GPP TS 36.331 V13.0.0 (2015-12)", 7th January, 2016.
NPL 6: "Motivation for new SI proposal: Enhancements to initial access and scheduling for low-latency LTE", RP-162295, 5th December 2016.

Summary of Invention

Technical Problem

An aspect of the present invention provides a terminal apparatus capable of efficiently performing random access with a base station apparatus, a base station apparatus for communicating with the terminal apparatus, a communication method used for the terminal apparatus, a communication method used for the base station apparatus, an integrated circuit mounted on the terminal apparatus, and an integrated circuit mounted on the base station apparatus.

Solution to Problem

(1) According to some aspects of the present invention, the following measures are provided. That is, a first aspect of the present invention is a terminal apparatus, the terminal apparatus includes: a higher layer processing unit configured to control a 2 step-random access procedure; and a transmitter configured to transmit, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and

Information C relating to a sequence of the random access preamble.

(2) A second aspect of the present invention is a base station apparatus, the base station apparatus includes: a higher layer processing unit configured to control a 2 step-random access procedure; and a receiver configured to receive, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and
Information C relating to a sequence of the random access preamble.

(3) A third aspect of the present invention is a communication method used for a terminal apparatus, the communication method includes the steps of: controlling a 2 step-random access procedure; and transmitting, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and
Information C relating to a sequence of the random access preamble.

(4) A fourth aspect of the present invention is a communication method used for a base station apparatus, the communication method includes the steps of: controlling a 2 step-random access procedure; and receiving, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and
Information C relating to a sequence of the random access preamble.

Advantageous Effects of Invention

According to one aspect of the present invention, a terminal apparatus and a base station apparatus can efficiently perform a random access procedure.

Brief Description of Drawings

FIG. 1 is a conceptual diagram of a radio communication system according to the present embodiment.
FIG. 2 is a diagram illustrating a schematic configuration of a radio frame according to the present embodiment.
FIG. 3 is a diagram illustrating a schematic configuration of an uplink slot according to the present embodiment.
FIG. 4 is a schematic block diagram illustrating a configuration of a terminal apparatus 1 according to the present embodiment.
FIG. 5 is a schematic block diagram illustrating a configuration of a target base station apparatus 3B according to the present embodiment.
FIG. 6 is a diagram illustrating an example of a 4 step contention based random access procedure according to the present embodiment.
FIG. 7 is a diagram illustrating an example of a 2 step contention based random access procedure according to the present embodiment.
FIG. 8 is a diagram illustrating modification of the 2 step contention based random access procedure according to the present embodiment.
FIG. 9 is a diagram illustrating an example of a non-contention based random access procedure according to the present embodiment.
FIG. 10 is a diagram illustrating an example of a correspondence between an event and a form of a random access procedure according to the present embodiment.

FIG. 11 is a diagram illustrating another example of the correspondence between the event and the form of the random access procedure according to the present embodiment.

FIG. 12 is a diagram illustrating an example of a correspondence among a resource set for random access preamble transmission, a transmission parameter for message X transmission, and a random access preamble group in the 2 step contention based random access procedure according to the present embodiment.

FIG. 13 is a diagram illustrating an example of a correspondence between the random access preamble and the transmission parameter for message X transmission in the 2 step contention based random access procedure according to the present embodiment.

FIG. 14 is a diagram illustrating an example of a correspondence between the random access preamble group and the transmission parameter for message X transmission in the 2 step contention based random access procedure according to the present embodiment.

FIG. 15 is a diagram illustrating another example of the correspondence between the random access preamble and the transmission parameter for message X transmission in the 2 step contention based random access procedure according to the present embodiment.

FIG. 16 is a diagram illustrating an example of the 2 step contention based random access procedure according to the present embodiment.

FIG. 17 is a diagram illustrating an example of a transport block including a random access response and/or a contention resolution according to the present embodiment.

FIG. 18 is a diagram illustrating an example of a random access preamble group for the random access procedure according to the present embodiment.

FIG. 19 is a diagram illustrating another example of the random access preamble group for the random access procedure according to the present embodiment.

Description of Embodiments

Embodiments of the present invention will be described below.

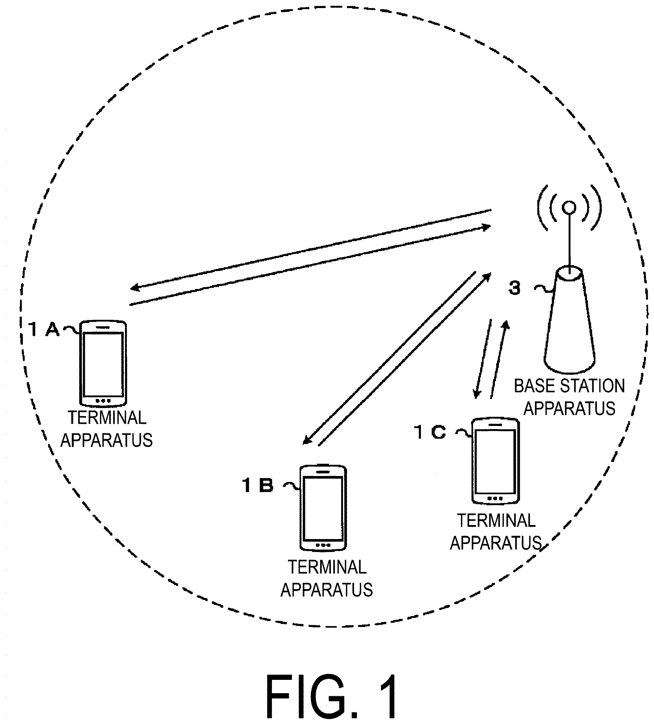

FIG. 1 is a conceptual diagram of a radio communication system according to the present embodiment. In FIG. 1, the radio communication system includes a terminal apparatus 1 and a base station apparatus 3. The base station apparatus 3 includes a source base station apparatus 3A, a target base station apparatus 3B, and a Mobility Management Entity (MME)/Gateway (GW). Uu is a radio access link between the terminal apparatus 1 and the base station apparatus 3. Uu includes an uplink from the terminal apparatus 1 to the base station apparatus 3 and a downlink from the base station apparatus 3 to the terminal apparatus 1. X2 is a backhaul link between the source base station apparatus 3A and the target base station apparatus 3B. S1 is a backhaul link between the source base station apparatus 3A/target base station apparatus 3B and the MME/GW.

The terminal apparatus 1 may perform a handover from the source base station apparatus 3A to the target base station apparatus 3B. The terminal apparatus 1 may perform a handover from a source cell to a target cell. The source cell may be managed by the source base station apparatus 3A. The target cell may be managed by the target base station apparatus 3B. The source base station apparatus 3A and the target base station apparatus 3B may be the same apparatus. In other words, the terminal apparatus 1 may perform a handover from the source cell managed by the source base station apparatus 3A to the target cell managed by the source base station apparatus 3A. The source cell is also referred to as a source primary cell. The target cell is also referred to as a target primary cell.

Hereinafter, carrier aggregation will be described.

According to the present embodiment, a plurality of serving cells is configured for the terminal apparatus 1. A technology in which the terminal apparatus 1 communicates via the plurality of serving cells is referred to as cell aggregation or carrier aggregation. In the carrier aggregation, the configured plurality of serving cells is also referred to as aggregated serving cells.

Time Division Duplex (TDD) and/or Frequency Division Duplex (FDD) is applied to the radio communication system in the present embodiment. For cell aggregation, TDD may be applied to all multiple serving cells. Alternatively, in a case of the cell aggregation, serving cells to which TDD is applied and serving cells to which FDD is applied may be aggregated. In the present embodiment, the serving cell to which the TDD is applied is also referred to as a TDD serving cell.

The multiple serving cells configured include one primary cell and one or more secondary cells. The primary cell is a serving cell in which an initial connection establishment procedure has been performed, a serving cell in which a Radio Resource Control connection re-establishment (RRC connection re-establishment) procedure has been initiated, or a cell indicated as a primary cell during a handover procedure. The secondary cell may be configured at a point of time when or after a Radio Resource Control (RRC) connection is established.

The primary cell may include the source primary cell and the target primary cell.

A carrier corresponding to a serving cell in the downlink is referred to as a downlink component carrier. A carrier corresponding to a serving cell in the uplink is referred to as an uplink component carrier. The downlink component carrier and the uplink component carrier are collectively referred to as a component carrier.

The terminal apparatus 1 can perform simultaneous transmission of a plurality of physical channels/a plurality of physical signals in a plurality of serving cells (component carriers) which is aggregated. The terminal apparatus 1 can perform simultaneous reception of a plurality of physical channels/a plurality of physical signals in a plurality of serving cells (component carriers) which is aggregated.

In a case that DC is configured for the terminal apparatus, a Master Cell Group (MCG) is a subset of all serving cells, and a Secondary Cell Group (SCG) is a subset of serving cells that are not part of the MCG. In a case that the DC is not configured for the terminal apparatus, the MCG includes all the serving cells. The MCG includes a primary cell and zero or more than zero secondary cells. The SCG includes a primary secondary cell and zero or more than zero secondary cells.

The MCG may include one primary TAG and zero or more than zero secondary TAGs. The SCG may include one primary TAG and zero or more than zero secondary TAGs.

A Timing Advance Group (TAG) is a group of serving cells configured by Radio Resource Control (RRC). The same value of a timing advance is applied to the serving cells included in the same TAG. The timing advance is used to adjust PUSCH/PUCCH/SRS/DMRS transmission timing in the serving cell. The primary TAG of the MCG may include a primary cell and zero or more than zero secondary cells. The primary TAG of the SCG may include a primary secondary cell and zero or more than zero secondary cells. The secondary TAG may include one or more than one secondary cell. The secondary TAG does not include a primary cell and a primary secondary cell.

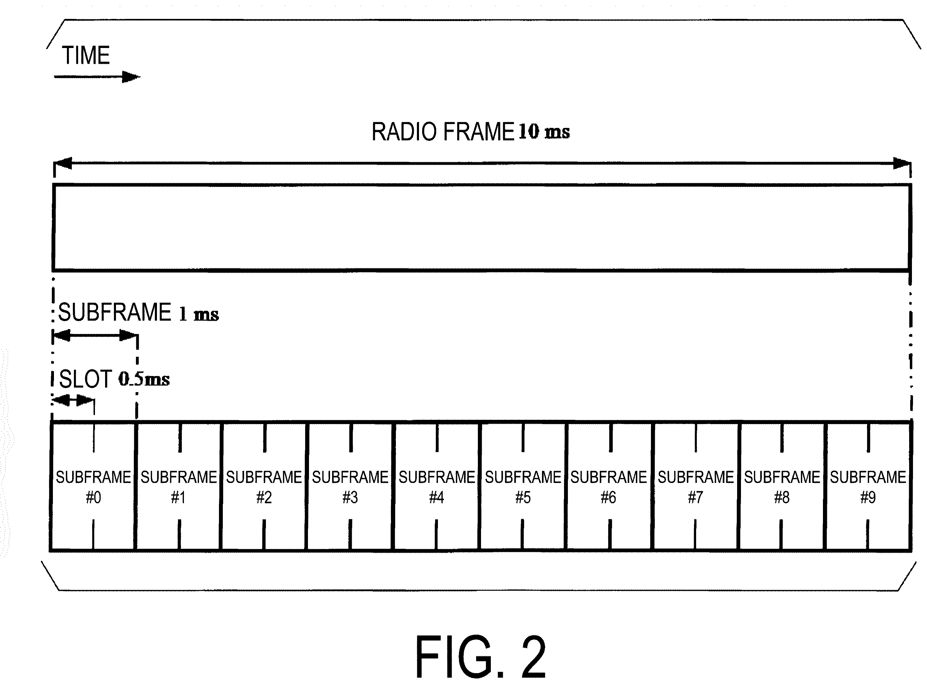

FIG. 2 is a diagram illustrating a schematic configuration of a radio frame according to the present embodiment. In FIG. 2, the horizontal axis is a time axis.

Various field sizes in a time domain are expressed by the number of time units $T_s = 1/(15000 \cdot 2048)$ seconds. A length of the radio frame is $T_f = 307200 \cdot T_s = 10$ ms (milliseconds). Each of the radio frames includes ten contiguous subframes in the time domain. A length of each subframe is $T_{subframe} = 30720 \cdot T_s = 1$ ms. Each subframe i includes two contiguous slots in the time domain. The two contiguous slots in the time domain are a slot having a slot number $n_s$ of 2i in the radio frame and a slot having a slot number $n_s$ of 2i + 1 in the radio frame. The length of each slot is $T_{slot} = 153600 \cdot n_s = 0.5$ ms. Each of the radio frames includes ten contiguous subframes in the time domain. Each of the radio frames includes 20 contiguous slots ($n_s = 0, 1, ..., 19$) in the time domain. A subframe is also referred to as a Transmission Time Interval (TTI).

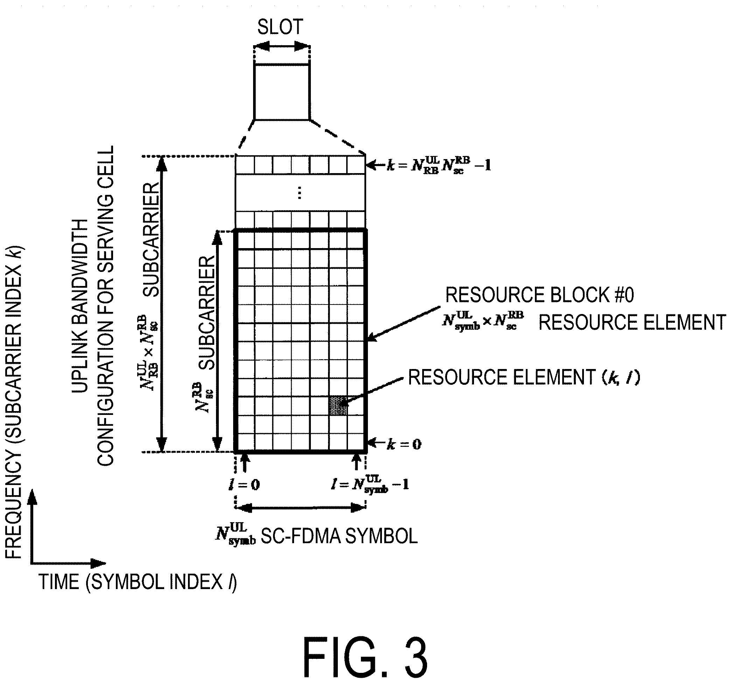

A configuration of a slot according to the present embodiment will be described below. FIG. 3 is a diagram illustrating a schematic configuration of an uplink slot according to the present embodiment. FIG. 3 illustrates a configuration of an uplink slot in a cell. In FIG. 3, the horizontal axis is a time axis, and the vertical axis is a frequency axis. In FIG. 3, 1 is a Single Carrier-Frequency Division Multiple Access (SC-FDMA) symbol number/index, and k is a subcarrier number/index.

The physical signal or the physical channel transmitted in each of the slots is expressed by a resource grid. In uplink, the resource grid is defined by multiple subcarriers and multiple SC-FDMA symbols. Each element within the resource grid is referred to as a resource element. The resource element is expressed by the subcarrier number/index k and the SC-FDMA symbol number/index 1. In the present embodiment, the resource refers to a frequency-time resource.

The resource grid is defined for each antenna port. In the present embodiment, description is given for one antenna port. The present embodiment may be applied to each of multiple antenna ports.

The uplink slot includes multiple SC-FDMA symbols 1 ($1 = 0, 1, ..., N^{UL}_{symb}$) in the time domain. $N^{UL}_{symb}$ indicates the number of SC-FDMA symbols included in one uplink slot. For a normal Cyclic Prefix (normal CP), $N^{UL}_{symb}$ is 7. For an extended Cyclic Prefix (extended CP), $N^{UL}_{symb}$ is 6.

The uplink slot includes a plurality of subcarriers k ($k = 0, 1, ..., N^{UL}_{RB} \times N^{RB}_{sc}$) in a frequency domain. $N^{UL}_{RB}$ is an uplink bandwidth configuration for the serving cell expressed by a multiple of $N^{RB}_{sc}$. $N^{RB}_{sc}$ is a (physical) resource block size in the frequency domain expressed by the number of subcarriers. In the present embodiment, the subcarrier interval $\Delta f$ is 15 kHz, $N^{RB}_{sc}$ is a size of 12 subcarriers. That is, in the present embodiment, $N^{RB}_{sc}$ is 180 kHz.

A resource block is used to express mapping of a physical channel to resource elements. For the resource block, a virtual resource block and a physical resource block are defined. The physical channel is first mapped to the virtual resource block. Thereafter, the virtual resource block is mapped to the physical resource block. One physical resource block is defined by $N^{UL}_{symb}$ consecutive SC-FDMA symbols in the time domain and by $N^{RB}_{sc}$ consecutive subcarriers in the frequency domain. Hence, one physical resource block is constituted by ($N^{UL}_{symb} \times N^{RB}_{sc}$) resource elements. One physical resource block corresponds to one slot in the time domain. The physical resource blocks are numbered ($0, 1, ..., N^{UL}_{RB} - 1$) in ascending order of frequencies in the frequency domain.

The downlink slot according to the present embodiment includes a plurality of OFDM symbols. Since the configuration of the downlink slot according to the present embodiment is the same except for a point that the resource grid is defined by multiple subcarriers and multiple OFDM symbols, the description of the configuration of the downlink slot will be omitted.

Physical channels and physical signals according to the present embodiment will be described.

In FIG. 1, in uplink radio communication from the terminal apparatus 1 to the base station apparatus 3, the following uplink physical channels are used. The uplink physical channels are used by a physical layer for transmission of information output from a higher layer.

- Physical Uplink Control CHannel (PUCCH)
- Physical Uplink Shared CHannel (PUSCH)
- Physical Random Access CHannel (PRACH)

The PUCCH is used to transmit Uplink Control Information (UCI). The uplink control information includes: downlink Channel State Information (CSI); a Scheduling Request (SR) used to request for a PUSCH (Uplink-Shared CHannel (UL-SCH)) resource for initial transmission; and a Hybrid Automatic Repeat request ACKnowledgement (HARQ-ACK) for downlink data (a Transport block, a Medium Access Control Protocol Data Unit (MAC PDU), a Downlink-Shared CHannel (DL-SCH), or a Physical Downlink Shared CHannel (PDSCH)). The HARQ-ACK indicates an acknowledgement (ACK) or a negative-acknowledgement (NACK). The HARQ-ACK is also referred to as HARQ feedback, HARQ information, HARQ control information, and ACK/NACK.

The PUSCH is used for transmission of uplink data (UpLink-Shared CHannel (UL-SCH)). The PUSCH may be used to transmit the HARQ-ACK and/or channel state information along with the uplink data. Furthermore, the PUSCH may be used to transmit only the channel state information or to transmit only the HARQ-ACK and the channel state information. The PUSCH is used to transmit a random access message 3.

The PRACH is used to transmit a random access preamble (random access message 1). The PRACH is used for indicating the initial connection establishment procedure, the handover procedure, the connection re-establishment procedure, synchronization (timing adjustment) for uplink transmission, and the request for the PUSCH (UL-SCH) resource.

The random access preamble may be given by cyclic-shifting a Zadoff-Chu sequence corresponding to a physical root sequence index u. The Zadoff-Chu sequence is generated based on the physical root sequence index u. In one cell, multiple random access preambles may be defined. The random access preamble may be specified by an index of the random access preamble. Different random access preambles corresponding to different indexes of the random access preamble correspond to different combinations of the physical root sequence index u and the cyclic shift, respectively. The physical root sequence index u and the cyclic shift may be given based at least on information included in system information.

The Zadoff-Chu sequence $x_u(n)$ corresponding to the physical root sequence index u is given by Equation (1) described below. Here, e is a Napier's constant. Nzc is a length of the Zadoff-Chu sequence $x_u(n)$. Additionally, n is an integer incremented from 0 to $N_{ZC} - 1$.

Equation 1

$$x_u(n) = e^{-j\frac{\pi u n(n+1)}{N_{ZC}}}, \quad 0 \le n \le N_{ZC} - 1$$

The random access preamble (a sequence of the random access preamble) $x_{u,v}(n)$ is given by Equation (2) described below. $C_v$ is a value of the cyclic shift. X mod Y is a function which outputs a remainder acquired by dividing X by Y.

Equation 2

$$x_{u,v}(n) = x_u((n + C_v) \bmod N_{ZC})$$

In FIG. 1, the following uplink physical signal is used in the uplink radio communication. The uplink physical signal is not used for transmitting information output from the higher layer, but is used by the physical layer.

- Uplink Reference Signal (UL RS)

According to the present embodiment, the following two types of uplink reference signals are used.

- Demodulation Reference Signal (DMRS)
- Sounding Reference Signal (SRS)

DMRS is associated with transmission of PUSCH or PUCCH. The DMRS is time-multiplexed with the PUSCH or the PUCCH. The base station apparatus 3 uses the DMRS in order to perform channel compensation of the PUSCH or the PUCCH. Transmission of both of the PUSCH and the DMRS is hereinafter referred to simply as transmission of the PUSCH. Transmission of both of the PUCCH and the DMRS is hereinafter referred to simply as transmission of the PUCCH.

SRS is not associated with the transmission of PUSCH or PUCCH. The base station apparatus 3 may use the SRS for measuring the channel state. The SRS is transmitted in the last SC-FDMA symbol in the uplink subframe or the SC-FDMA symbol in an UpPTS.

In FIG. 1, the following downlink physical channels are used for downlink radio communication from the base station apparatus 3 to the terminal apparatus 1. The downlink physical channels are used by the physical layer for transmission of information output from the higher layer.

- Physical Broadcast CHannel (PBCH)
- Physical Control Format Indicator CHannel (PCFICH)
- Physical Hybrid automatic repeat request Indicator CHannel (PHICH)
- Physical Downlink Control CHannel (PDCCH)
- Enhanced Physical Downlink Control CHannel (EPDCCH)
- Physical Downlink Shared CHannel (PDSCH)
- Physical Multicast CHannel (PMCH)

The PBCH is used for broadcasting a Master Information Block (MIB, a Broadcast CHannel (BCH)) that is shared in the terminal apparatuses 1. The MIB is transmitted at intervals of 40 ms, and, within the interval, the MIB is repeatedly transmitted every 10 ms. Specifically, initial transmission of the MIB is performed in a subframe 0 in a radio frame that satisfies SFN mod 4 = 0, and re-transmission (repetition) of the MIB is performed in subframes 0 in all the other radio frames. A system frame number (SFN) is a radio frame number. The MIB is system information. For example, the MIB includes information indicating the SFN.

The PCFICH is used for transmission of information indicating a region (OFDM symbols) to be used for transmission of the PDCCH.

The PHICH is used for transmission of an HARQ indicator for uplink data (Uplink Shared CHannel (UL-SCH)) received by the base station apparatus 3. The HARQ indicator indicates the HARQ-ACK.

The PDCCH and the EPDCCH are used to transmit Downlink Control Information (DCI). The downlink control information is also referred to as a DCI format. The downlink control information includes a downlink grant and an uplink grant. The downlink grant is also referred to as a downlink assignment or a downlink allocation.

One downlink grant is used for scheduling of one PDSCH within one serving cell. The downlink grant is used for the scheduling of the PDSCH within the same subframe as the subframe on which the downlink grant is transmitted.

One uplink grant is used for scheduling of one PUSCH within one serving cell. The uplink grant is used for scheduling of the PUSCH within the fourth or later subframe from the subframe in which the uplink grant is transmitted.

CRC parity bits added to a downlink grant or an uplink grant are scrambled with a Cell-Radio Network Temporary Identifier (C-RNTI), a Temporary C-RNTI, a Semi Persistent Scheduling (SPS) C-RNTI, and a Random Access-Radio Network Temporary Identifier (RA-RNTI). The C-RNTI and the SPS C-RNTI are identifiers for identifying a terminal apparatus within a cell. The Temporary C-RNTI is used during a contention based random access procedure. The RA-RNTI is used for scheduling of the random access response. The uplink grant to which the CRC parity bits scrambled with the RNTI are added is also referred to as an uplink grant for RNTI and an uplink grant corresponding to RNTI. The PDCCH including the uplink grant to which the CRC parity bits scrambled with the RNTI are added is also referred to as a PDCCH for RNTI, a PDCCH corresponding to RNTI, a PDCCH addressed to RNTI, or a PDCCH including RNTI.

The C-RNTI is used to control the PDSCH or the PUSCH in one subframe. The terminal apparatus 1 may transmit the PUSCH including the transport block based on the detection of the PDCCH including the uplink grant to which the CRC parity bits scrambled with the C-RNTI are added. Re-transmission of the transport block may be indicated by the PDCCH including the uplink grant to which the CRC parity bits scrambled with the C-RNTI are added.

The SPS C-RNTI is used to periodically allocate a resource for the PDSCH or the PUSCH. The terminal apparatus 1 detects the PDCCH including the uplink grant to which the CRC parity bits scrambled with the SPS C-RNTI are added, and in a case that the uplink grant is determined to be valid as an SPS activation command, stores the uplink grant as a configured uplink grant. A MAC layer of the terminal apparatus 1 considers the configured uplink grant to periodically occur. The subframe in which the configured uplink grant is considered to occur is given by a first period and a first offset. The terminal apparatus 1 receives information indicating the first period from the base station apparatus 3. The re-transmission of the transport block transmitted on the PUSCH periodically allocated is indicated by the uplink grant to which the CRC parity bits scrambled with the SPS C-RNTI are added. The configured uplink grant is also referred to as an uplink grant configured by Medium Access Control (MAC) or a first configured uplink grant.

The PDSCH is used to transmit downlink data (Downlink Shared CHannel (DL-SCH)). The PDSCH is used to transmit a random access message 2 (random access response). The PDSCH is used to transmit a handover command. The PDSCH is used to transmit system information including a parameter used for initial access.

The PMCH is used to transmit multicast data (Multicast CHannel (MCH)).

In FIG. 1, the following downlink physical signals are used for the downlink radio communication. The downlink physical signals are not used for transmission of information output from the higher layer, but are used by the physical layer.

- Synchronization signal (SS)
- Downlink Reference Signal (DL RS)

The synchronization signal is used for the terminal apparatus 1 to take synchronization in the frequency domain and the time domain in the downlink. The synchronization signal includes a Primary Synchronization Signal (PSS) and a Second Synchronization Signal (SSS).

The Downlink Reference Signal is used for the terminal apparatus 1 to perform channel compensation on a downlink physical channel. The downlink reference signal is used in order for the terminal apparatus 1 to obtain the downlink channel state information.

According to the present embodiment, the following seven types of downlink reference signals are used.

- Cell-specific Reference Signal (CRS)
- UE-specific Reference Signal (URS) relating to the PDSCH
- Demodulation Reference Signal (DMRS) relating to the EPDCCH
- Non-Zero Power Channel State Information - Reference Signal (NZP CSI-RS)
- Zero Power Channel State Information - Reference Signal (ZP CSI-RS)
- Multimedia Broadcast and Multicast Service over Single Frequency Network Reference signal (MBSFN RS)
- Positioning Reference Signal (PRS)

The downlink physical channels and the downlink physical signals are collectively referred to as a downlink signal. The uplink physical channels and the uplink physical signals are collectively referred to as an uplink signal. The downlink physical channels and the uplink physical channels are collectively referred to as a physical channel. The downlink physical signals and the uplink physical signals are collectively referred to as a physical signal.

The BCH, the MCH, the UL-SCH, and the DL-SCH are transport channels. A channel used in a Medium Access Control (MAC) layer is referred to as a transport channel. A unit of the transport channel used in the MAC layer is also referred to as a transport block (TB) or a MAC Protocol Data Unit (PDU). A Hybrid Automatic Repeat reQuest (HARQ) is controlled for each transport block in the MAC layer. The transport block is a unit of data that the MAC layer delivers to the physical layer. In the physical layer, the transport block is mapped to a codeword, and coding processing is performed for each codeword.

The base station apparatus 3 and the terminal apparatus 1 exchange (transmit and/or receive) a signal in the higher layer. For example, the base station apparatus 3 and the terminal apparatus 1 may transmit and/or receive Radio Resource Control (RRC) signaling (also referred to as RRC message or RRC information) in the RRC layer, respectively. Furthermore, the base station apparatus 3 and the terminal apparatus 1 may transmit and/or receive, in the Medium Access Control (MAC) layer, a MAC Control Element (CE). Here, the RRC signaling and/or the MAC CE is also referred to as higher layer signaling.

The PUSCH and the PDSCH are used to transmit the RRC signaling and the MAC CE. Here, the RRC signaling transmitted from the base station apparatus 3 on the PDSCH may be signaling common to multiple terminal apparatuses 1 in a cell. The RRC signaling transmitted from the base station apparatus 3 on the PDSCH may be signaling dedicated to a certain terminal apparatus 1 (also referred to as dedicated signaling or UE specific signaling). A cell-specific parameter may be transmitted by using the signaling common to the multiple terminal apparatuses 1 in the cell or the signaling dedicated to the certain terminal apparatus 1. A UE-specific parameter may be transmitted by using the signaling dedicated to the certain terminal apparatus 1.

Configurations of apparatuses according to the present embodiment will be described below.

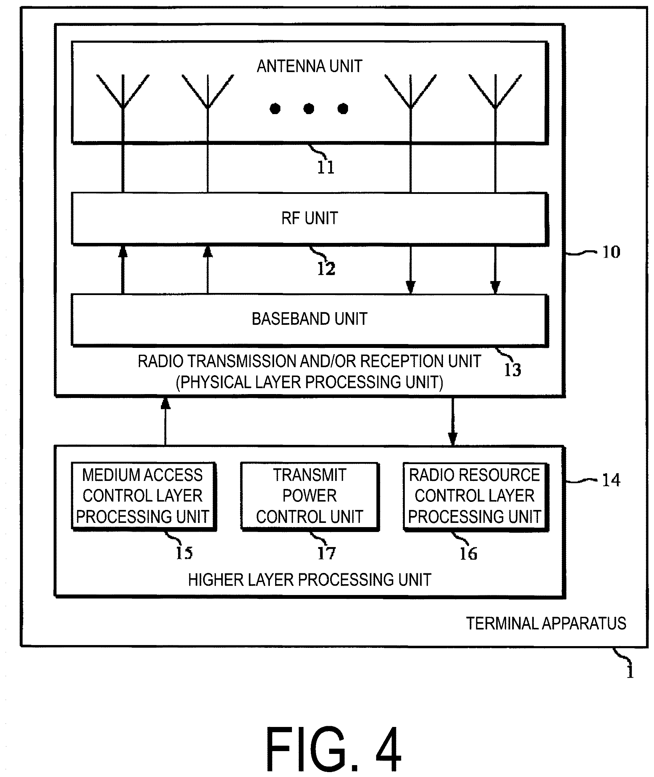

FIG. 4 is a schematic block diagram illustrating a configuration of the terminal apparatus 1 according to the present embodiment. As illustrated, the terminal apparatus 1 is configured to include a radio transmission and/or reception unit 10 and a higher layer processing unit 14. The radio transmission and/or reception unit 10 is configured to include an antenna unit 11, a radio frequency (RF) unit 12, and a baseband unit 13. The higher layer processing unit 14 is configured to include a medium access control layer processing unit 15 and a radio resource control layer processing unit 16. The radio transmission and/or reception unit 10 is also referred to as a transmitter, a receiver or a physical layer processing unit.

The higher layer processing unit 14 outputs uplink data (transport block) generated by a user operation or the like, to the radio transmission and/or reception unit 10. The higher layer processing unit 14 performs processing of the Medium Access Control (MAC) layer, the Packet Data Convergence Protocol (PDCP) layer, the Radio Link Control (RLC) layer, and the Radio Resource Control (RRC) layer.

The medium access control layer processing unit 15 included in the higher layer processing unit 14 performs processing of the Medium Access Control layer. The medium access control layer processing unit 15 controls transmission of a scheduling request, based on various types of configuration information/parameters managed by the radio resource control layer processing unit 16.

The radio resource control layer processing unit 16 included in the higher layer processing unit 14 performs processing of the Radio Resource Control layer. The radio resource control layer processing unit 16 manages various types of configuration information/parameters of its own apparatus. The radio resource control layer processing unit 16 sets various types of configuration information/parameters based on higher layer signaling received from the base station apparatus 3. Namely, the radio resource control layer processing unit 16 sets the various types of configuration information/parameters in accordance with the information indicating the various types of configuration information/parameters received from the base station apparatus 3.

The radio transmission and/or reception unit 10 performs processing of the physical layer, such as modulation, demodulation, coding, decoding, and the like. The radio transmission and/or reception unit 10 demultiplexes, demodulates, and decodes a signal received from the base station apparatus 3, and outputs the information resulting from the decoding to the higher layer processing unit 14. The radio transmission and/or reception unit 10 generates a transmit signal by modulating and coding data, and performs transmission to the base station apparatus 3.

The RF unit 12 converts (down-converts) a signal received via the antenna unit 11 into a baseband signal by orthogonal demodulation and removes unnecessary frequency components. The RF unit 12 outputs the processed analog signal to the baseband unit.

The baseband unit 13 converts the analog signal input from the RF unit 12 into a digital signal. The baseband unit 13 removes a portion corresponding to a Cyclic Prefix (CP) from the digital signal resulting from the conversion, performs Fast Fourier Transform (FFT) of the signal from which the CP has been removed, and extracts a signal in the frequency domain.

The baseband unit 13 generates an SC-FDMA symbol by performing Inverse Fast Fourier Transform (IFFT) of the data, adds CP to the generated SC-FDMA symbol, generates a baseband digital signal, and converts the baseband digital signal into an analog signal. The baseband unit 13 outputs the analog signal resulting from the conversion, to the RF unit 12.

The RF unit 12 removes unnecessary frequency components from the analog signal input from the baseband unit 13 using a low-pass filter, up-converts the analog signal into a signal of a carrier frequency, and transmits the up-converted signal via the antenna unit 11. Furthermore, the RF unit 12 amplifies power. Furthermore, the RF unit 12 may have a function of controlling transmit power. The RF unit 12 is also referred to as a transmit power control unit.

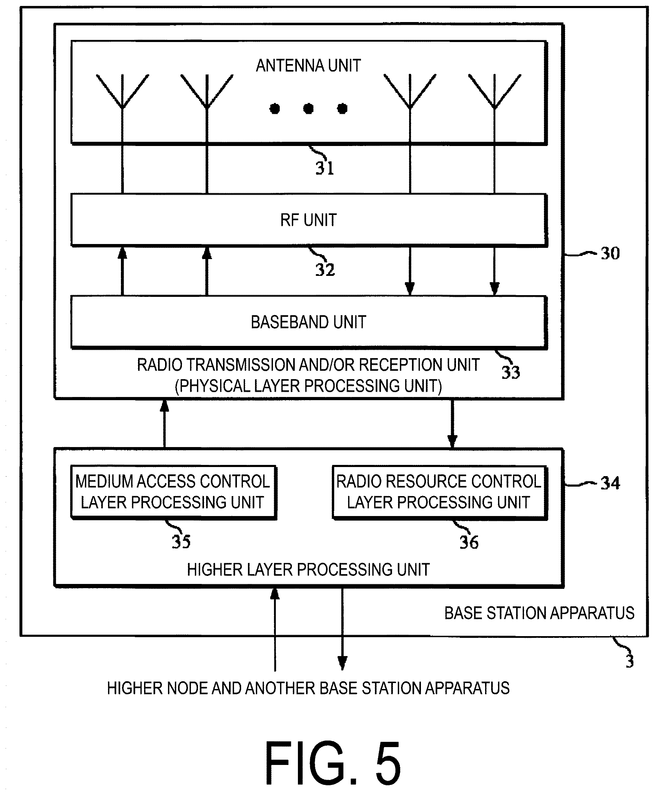

FIG. 5 is a schematic block diagram illustrating a configuration of the target base station apparatus 3B according to the present embodiment. As illustrated, the target base station apparatus 3B is configured to include a radio transmission and/or reception unit 30 and a higher layer processing unit 34. The radio transmission and/or reception unit 30 is configured to include an antenna unit 31, an RF unit 32, and a baseband unit 33. The higher layer processing unit 34 is configured to include a medium access control layer processing unit 35 and a radio resource control layer processing unit 36. The radio transmission and/or reception unit 30 is also referred to as a transmitter, a receiver or a physical layer processing unit. A configuration of the source base station apparatus 3A may be the same as the configuration of the target base station apparatus 3B.

The higher layer processing unit 34 performs processing of the Medium Access Control (MAC) layer, the Packet Data Convergence Protocol (PDCP) layer, the Radio Link Control (RLC) layer, and the Radio Resource Control (RRC) layer.

The medium access control layer processing unit 35 included in the higher layer processing unit 34 performs processing of the Medium Access Control layer. The medium access control layer processing unit 35 performs processing associated with a scheduling request, based on various types of configuration information/parameters managed by the radio resource control layer processing unit 36. The higher layer processing unit 34 may transmit information to other base station apparatuses and an MME/GW3C. The higher layer processing unit 34 may receive information from other base station apparatuses and the MME/GW3C.

The radio resource control layer processing unit 36 included in the higher layer processing unit 34 performs processing of the Radio Resource Control layer. The radio resource control layer processing unit 36 generates, or acquires from a higher node, downlink data (transport block) allocated on a physical downlink shared channel, system information, an RRC message, a MAC Control Element (CE), and the like, and performs output to the radio transmission and/or reception unit 30. Furthermore, the radio resource control layer processing unit 36 manages various types of configuration information/parameters for each of the terminal apparatuses 1. The radio resource control layer processing unit 36 may set various types of configuration information/parameters for each of the terminal apparatuses 1 via the higher layer signaling. Namely, the radio resource control layer processing unit 36 transmits/broadcasts information indicating various types of configuration information/parameters.

The functionality of the radio transmission and/or reception unit 30 is similar to the functionality of the radio transmission and/or reception unit 10, and hence description thereof is omitted.

Each of the units having the reference signs 10 to 16 included in the terminal apparatus 1 may be configured as a circuit. Each of the units having the reference signs 30 to 36 included in the base station apparatus 3 may be configured as a circuit.

The random access procedures are described in detail below. The random access procedure includes a contention based random access procedure and a non-contention based random access procedure. The contention based random access procedure includes a 2 step contention based random access procedure and a 4 step contention based random access procedure.

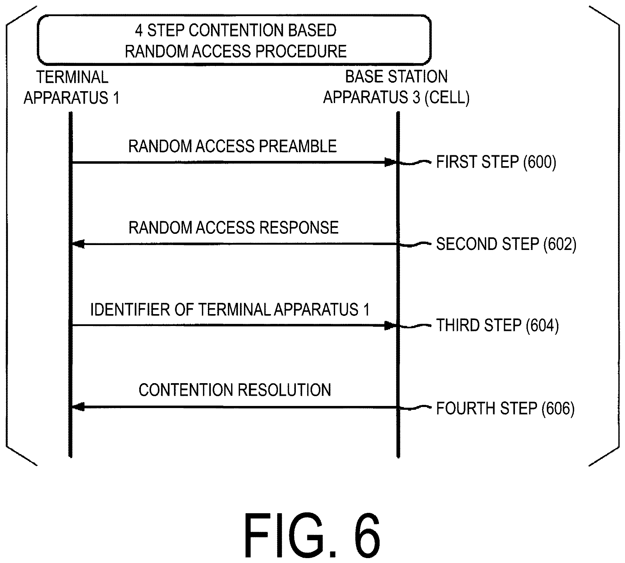

FIG. 6 is a diagram illustrating an example of the 4 step contention based random access procedure according to the present embodiment. The 4 step contention based random access procedure includes a first step (600), a second step (602), a third step (604), and a fourth step (606).

In the first step (600), the terminal apparatus 1 transmits the random access preamble. The random access preamble is included in the PRACH. In the first step (600), the MAC layer itself of the terminal apparatus 1 selects an index of the random access preamble. That is, in the first step (600), the base station apparatus 3 does not notify the terminal apparatus 1 of the index of the random access preamble.

In the second step (602), the terminal apparatus 1 receives the random access response. The random access response is included in the PDSCH. Here, the PDCCH for the RA-RNTI is used for scheduling of the PDSCH including the random access response. A value of the RA-RNTI may be given based on the PRACH resource used for transmission of the random access preamble in the first step (600). The random access response includes a random access preamble identifier indicating an index of the random access preamble, an uplink grant, information indicating the Temporary C-RNTI, and information indicating a timing advance. In a case that the random access response includes the random access preamble identifier corresponding to the random access preamble transmitted in the first step (600), the terminal apparatus 1 considers the random access response to have been successfully received.

In the third step (604), the terminal apparatus 1 transmits an identifier of the terminal apparatus 1. Here, the identifier of the terminal apparatus 1 may be the C-RNTI. The identifier of the terminal apparatus 1 or the C-RNTI is included in the PUSCH. Here, the PUSCH for the identifier of the terminal apparatus 1 or the C-RNTI is scheduled by the uplink grant included in the random access response.

In the fourth step (606), the terminal apparatus 1 receives a contention resolution. The contention resolution may be a UE contention resolution identifier or the C-RNTI. In a case that the terminal apparatus 1 has transmitted the C-RNTI on the PUSCH in the third step (604) and the terminal apparatus 1 receives the PDCCH for the C-RNTI, the terminal apparatus 1 may consider the contention resolution to be successful, and may consider the random access procedure to have been successfully completed.

Information indicating the UE contention resolution identifier is included in the PDSCH. Here, the PDCCH for the Temporary C-RNTI is used for scheduling of the PDSCH. In a case that (i) the terminal apparatus 1 has not transmitted the C-RNTI in the PUSCH of the third step (604), (ii) the terminal apparatus 1 has transmitted the identifier of the terminal apparatus 1 in the PUSCH of the third step (606), (iii) the terminal apparatus 1 receives the PDCCH for the Temporary C-RNTI, (iv) the PDSCH scheduled by the PDCCH includes the information indicating the UE contention resolution identifier, and (v) the UE contention resolution identifier and the identifier of the terminal apparatus 1 transmitted in the third step (606) match with each other, the terminal apparatus 1 may consider the contention resolution to be successful, and may consider the random access procedure to have been successfully completed.

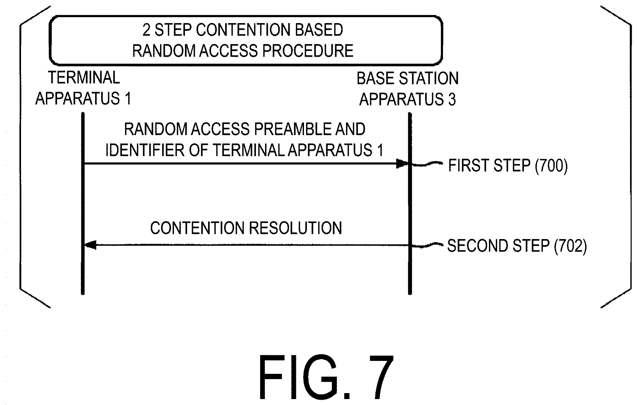

FIG. 7 is a diagram illustrating an example of the 2 step contention based random access procedure according to the present embodiment. The 2 step contention based random access procedure includes a first step (700) and a second step (702).

In the first step (700), the random access preamble and the identifier of the terminal apparatus 1 are transmitted. Here, the identifier of the terminal apparatus 1 may be the C-RNTI. The random access preamble may be included in the PRACH. The identifier of the terminal apparatus 1 may be included in PUSCH. The random access preamble and the identifier of the terminal apparatus 1 may be included in the same one physical channel. In the first step (700), the MAC layer itself of the terminal apparatus 1 selects the index of the random access preamble. That is, in the first step (700), the base station apparatus 3 does not notify the terminal apparatus 1 of the index of the random access preamble.

In the second step (702), the terminal apparatus 1 receives a contention resolution. The contention resolution may be the UE contention resolution identifier or the C-RNTI. In a case that the terminal apparatus 1 has transmitted the C-RNTI in the first step (700) and the terminal apparatus 1 receives the PDCCH including the C-RNTI, the terminal apparatus 1 may consider the contention resolution to be successful, and may consider the random access procedure to have been successfully completed.

The UE contention resolution identifier is included in the PDSCH. Here, for scheduling of the PDSCH, the DCI format having the CRC scrambled with an X-RNTI added thereto may be used. The X-RNTI may be given based at least on a resource (PRACH resource) used for transmission of the random access preamble in the first step (700) and/or a resource (PUSCH resource) used for transmission of the identifier of the terminal apparatus 1. The X-RNTI may be the RA-RNTI.

In a case that (i) the terminal apparatus 1 has not transmitted the C-RNTI in the first step (700), (ii) the terminal apparatus 1 has transmitted the identifier of the terminal apparatus 1 in the first step (700), (iii) the terminal apparatus 1 receives the PDCCH for the X-RNTI, (iv) the PDSCH scheduled by the PDCCH includes the information indicating the UE contention resolution identifier, and (v) the UE contention resolution identifier and the identifier of the terminal apparatus 1 transmitted in the first step (700) match with each other, the terminal apparatus 1 may consider the contention resolution to be successful, and may consider the random access procedure to have been successfully completed. The PDSCH scheduled by the PDCCH for the X-RNTI may include some or all of the uplink grant, the information indicating the C-RNTI, and the information indicating the timing advance. In other words, the contention resolution may include some or all of the uplink grant, the information indicating the C-RNTI, and the information indicating the timing advance. The PDSCH scheduled by the PDCCH for the X-RNTI may not include information indicating the index of the random access preamble. Here, the terminal apparatus 1 may set the C-RNTI to a value of the information indicating the C-RNTI.

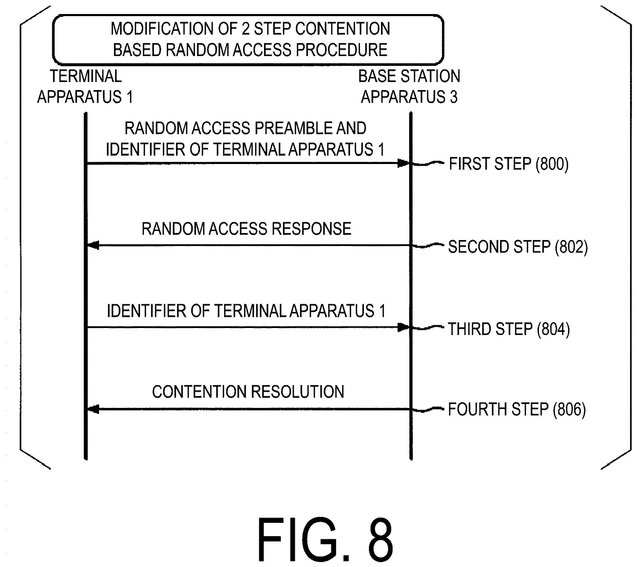

FIG. 8 is a diagram illustrating modification of the 2 step contention based random access procedure according to the present embodiment. The modification of the 2 step contention based random access procedure includes a first step (800), a second step (802), a third step (804), and a fourth step (806). The first step (800) is the same as the first step (700). The second step (802) is the same as the second step (602). The third step (804) is the same as the third step (604). The fourth step (806) is the same as the fourth step (606). In other words, after the first step of the 2 step random access procedure, transition from the 2 step contention based random access procedure to the 4 step contention based random access procedure may be performed.

In a case that the base station apparatus 3 detects the random access preamble and cannot detect the identifier of the terminal apparatus 1 in the first step (800), the base station apparatus 3 transmits the random access response in the second step (802). In other words, in a case that the base station apparatus 3 detects the random access preamble and cannot detect the identifier of the terminal apparatus 1 in the first step of the 2 step random access procedure, the second step of the 4 step random access procedure may be initiated by the base station apparatus 3. In a case that the base station apparatus 3 detects the random access preamble and the identifier of the terminal apparatus 1 in the first step of the 2 step random access procedure, the second step of the 2 step random access procedure may be initiated by the base station apparatus 3.

After the first step (700, 800) of the 2 step contention based random access procedure, the terminal apparatus 1 may monitor the contention resolution in the second step (702) and the random access response in the second step (802). In other words, in the second step (702, 802), the terminal apparatus 1 may monitor the PDCCH associated with the random access response and the PDCCH associated with the contention resolution. The PDCCH associated with the random access response may be the PDCCH for the RA-RNTI. The PDCCH associated with the contention resolution may be the PDCCH for the X-RNTI.

After the first step (600) of the 4 step contention based random access procedure, the terminal apparatus 1 may monitor the random access response of the second step (602). In other words, in the second step (602), the terminal apparatus 1 may monitor the PDCCH associated with the random access response. In the second step (602), the terminal apparatus 1 need not monitor the contention resolution. In other words, in the second step (602), the terminal apparatus 1 need not monitor the PDCCH associated with the contention resolution.

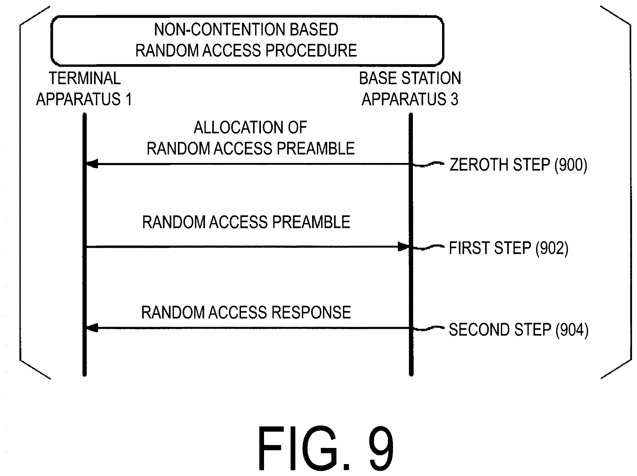

FIG. 9 is a diagram illustrating an example of the non-contention based random access procedure according to the present embodiment. The non-contention based random access procedure includes a zeroth step (900), a first step (902), and a second step (904).

In the zeroth step (900), the terminal apparatus 1 receives an allocation of the random access preamble. The allocation of the random access preamble may be included in a handover command or the PDCCH for the C-RNTI. The allocation of the random access preamble may indicate the index of the random access preamble. The PDCCH including the allocation of the random access preamble is also referred to as a PDCCH order or a PDCCH order indicating initiation of the random access procedure.

In the first step (902), the terminal apparatus 1 selects the random access preamble based on the allocation of the random access preamble, and transmits the selected random access preamble. The random access preamble is included in the PRACH. In the first step (902), the MAC layer itself of the terminal apparatus 1 does not select the index of the random access preamble.

In the second step (904), the terminal apparatus 1 receives the random access response. The random access response is included in the PDSCH. Here, the PDCCH for the RA-RNTI is used for scheduling of the PDSCH including the random access response. The value of the RA-RNTI may be given based on the PRACH resource used for transmission of the random access preamble in the first step (900). The random access response includes the random access preamble identifier indicating the index of the random access preamble, the uplink grant, the information indicating the Temporary C-RNTI, and the information indicating the timing advance. In a case that the random access response includes the random access preamble identifier corresponding to the random access preamble transmitted in the first step (900), the random access response is considered to be successfully received. In a case that the random access response includes the random access preamble identifier corresponding to the random access preamble transmitted in the first step (900), notification of the allocation of the random access preamble is performed, and the index of the random access preamble is not selected by the MAC itself of the terminal apparatus 1, the terminal apparatus 1 considers the random access procedure to have been successfully completed.

In the zeroth step (900), in a case that the allocation of the random access preamble indicates a first prescribed value, the terminal apparatus 1 may initiate the 4 step contention based random access procedure. In other words, a case that the MAC itself of the terminal apparatus 1 does not select the index of the random access preamble may be a case that the allocation of the random access preamble is not the first prescribed value.

In the zeroth step (900), in a case that the allocation of the random access preamble indicates a second prescribed value, the terminal apparatus 1 may initiate the 2 step contention based random access procedure. In other words, a case that the MAC itself of the terminal apparatus 1 does not select the index of the random access preamble may be a case that the allocation of the random access preamble is different from both the first prescribed value and the second prescribed value.

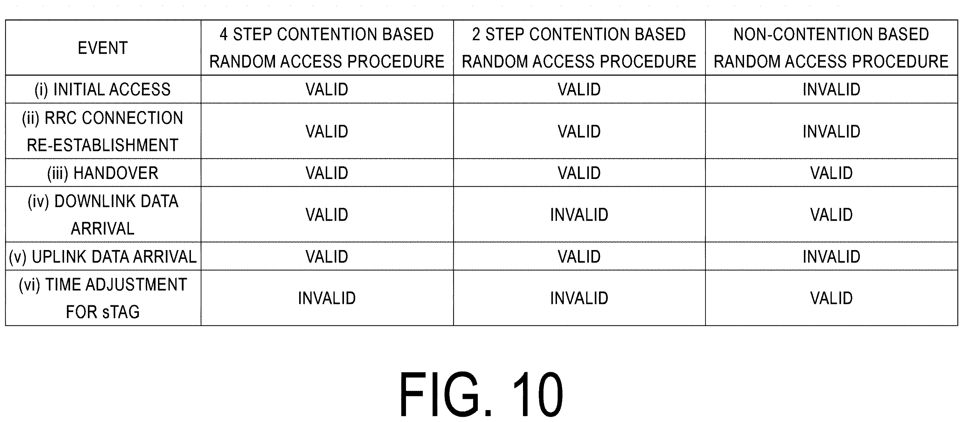

FIG. 10 is a diagram illustrating an example of a correspondence between an event and a form of the random access procedure according to the present embodiment. The random access procedure is performed for (event i) initial access from RRC_IDLE, (event ii) RRC connection re-establishment, (event iii) handover, (event iv) downlink data arrival during RRC_CONNECTED, (event v) uplink data arrival during RRC_CONNECTED, and (event vi) time adjustment for secondary TAG. The random access procedure for (event iv) downlink data arrival during RRC_CONNECTED may be performed in a case that a status of the uplink synchronization is asynchronous. The random access procedure for (event v) uplink data arrival during RRC_CONNECTED may be performed in a case that the status of the uplink synchronization is asynchronous, or in a case that there is no PUCCH resource for a scheduling request.

The random access procedure relating to the event i through the event v may be performed on the primary cell. The first step in the random access procedure relating to the event vi may be performed on the secondary cell. In other words, the random access procedure performed for (event vi) time adjustment for secondary TAG is initiated in the secondary cell belonging to the secondary TAG.

The random access procedure for (event i) initial access from RRC_IDLE may include the 4 step contention based random access procedure and the 2 step contention based random access procedure. The random access procedure for (event i) initial access from RRC_IDLE may not include the non-contention based random access procedure. The random access procedure for (event i) initial access from RRC_IDLE may be initiated by the RRC.

The random access procedure for (event ii) RRC connection re-establishment may include the 4 step contention based random access procedure and the 2 step contention based random access procedure. The random access procedure for (event ii) RRC connection re-establishment may not include the non-contention based random access procedure. The random access procedure for (event ii) RRC connection re-establishment may be initiated by the RRC.

The fact that the random access procedure includes the 4 step contention based random access procedure may be a fact that the 4 step contention based random access procedure is supported, the 4 step contention based random access procedure is valid, or the 4 step contention based random access procedure is applicable. The same applies to the 2 step contention based random access procedure and the non-contention based random access procedure.

The system information transmitted/broadcast by the base station apparatus 3 (cell) may include PRACH information and random access information. The PRACH information may include information indicating the PRACH resource, information relating to the physical root sequence index u relating to the random access preamble, and information relating to the cyclic shift $C_v$ for the random access preamble. The physical root sequence index u and the cyclic shift $C_v$ are used to determine the sequence of the random access preamble. The random access information may include information indicating the number of random access preambles and information indicating the number of random access preambles for the contention based random access procedure. Furthermore, the system information may include information for the 2 step contention based random access procedure. The information for the 2 step contention based random access procedure may include information indicating that the 2 step contention based random access procedure is supported in the cell, information indicating a resource for transmission of the identifier of the terminal apparatus 1 in the first step of the 2 step contention based random access procedure, information indicating a modulation scheme for data including the identifier of the terminal apparatus 1 in the first step of the 2 step contention based random access procedure and/or information indicating a threshold of Reference Signal Received Power (RSRP). Here, the system information does not include the allocation of the random access preamble for the zeroth step of the non-contention based random access procedure.

The terminal apparatus 1 measures the RSRP from the downlink reference signal of the cell. The terminal apparatus 1 may initiate any one of the 2 step contention based random access procedure and the 4 step contention based random access procedure based on the measured RSRP and the threshold of the RSRP. In a case that the measured RSRP does not exceed the threshold of the RSRP, the terminal apparatus 1 may initiate the 4 step contention based random access procedure. In a case that the measured RSRP exceeds the threshold of the RSRP, the terminal apparatus 1 may initiate the 2 step contention based random access procedure.

The random access procedure for (event iii) handover may include the 4 step contention based random access procedure, the 2 step contention based random access procedure, and the non-contention based random access procedure. The handover command may include the above-described PRACH information, the above-described random access information, the above-described information for the 2 step contention based random access procedure, and/or the allocation of the random access preamble for the zeroth step of the non-contention based random access procedure.

The terminal apparatus 1 may initiate, based on the information included in the handover command, any one of the 4 step contention based random access procedure, the 2 step contention based random access procedure, and the non-contention based random access procedure.

In a case that the handover command includes the allocation of the random access preamble, the terminal apparatus 1 may initiate the non-contention based random access procedure.

In a case that the handover command does not include the allocation of the random access preamble and the handover command includes the information for the 2 step contention based random access procedure, the terminal apparatus 1 may initiate, based on the measured RSRP and the threshold of the RSRP, any one of the 2 step contention based random access procedure and the 4 step contention based random access procedure.

In a case that the handover command does not include the allocation of the random access preamble and the handover command includes the information for the 2 step contention based random access procedure, the terminal apparatus 1 may initiate, based on the measured RSRP and the threshold of the RSRP, any one of the 2 step contention based random access procedure and the 4 step contention based random access procedure. Here, in a case that the measured RSRP does not exceed the threshold of the RSRP, the terminal apparatus 1 may initiate the 4 step contention based random access procedure. Here, in a case that the measured RSRP exceeds the threshold of the RSRP, the terminal apparatus 1 may initiate the 2 step contention based random access procedure.

In a case that the handover command includes the allocation of the random access preamble and the allocation of the random access preamble indicates the first prescribed value, the terminal apparatus 1 may initiate the 4 step contention based random access procedure.

In a case that the handover command includes the allocation of the random access preamble, the allocation of the random access preamble indicates the second prescribed value, and the handover command includes the information for the 2 step contention based random access procedure, the terminal apparatus 1 may initiate the 2 step contention based random access procedure.

In a case that the handover command does not include the allocation of the random access preamble and the handover command does not include the information for the 2 step contention based random access procedure, the terminal apparatus 1 may initiate the 4 step contention based random access procedure.

The random access procedure for (event iv) downlink data arrival during RRC_CONNECTED may include the 4 step contention based random access procedure and the non-contention based random access procedure. The random access procedure for (event iv) downlink data arrival during RRC_CONNECTED may not include the 2 step contention based random access procedure. The random access procedure for (event iv) downlink data arrival during RRC_CONNECTED is initiated by the PDCCH order.

In a case that the allocation of the random access preamble included in the PDCCH order is a value other than the first prescribed value, the terminal apparatus 1 may initiate the non-contention based random access procedure. In a case that the allocation of the random access preamble included in the PDCCH order is the first prescribed value, the terminal apparatus 1 may initiate the 4 step contention based random access procedure. Even in a case that the allocation of the random access preamble included in the PDCCH order is the second prescribed value, the terminal apparatus 1 may initiate the 4 step contention based random access procedure.

The random access procedure for (event v) uplink data arrival during RRC_CONNECTED may include the 4 step contention based random access procedure and the 2 step contention based random access procedure. The random access procedure for (event v) uplink data arrival during RRC_CONNECTED may not include the non-contention based random access procedure. The random access procedure for (event v) uplink data arrival during RRC_CONNECTED is initiated by the MAC itself.

The random access procedure performed for (event vi) time adjustment for secondary TAG is initiated by the PDCCH order. In other words, the allocation of the random access preamble included in the PDCCH order indicating the initiation of the random access procedure in the secondary cell indicates a value other than the first prescribed value.

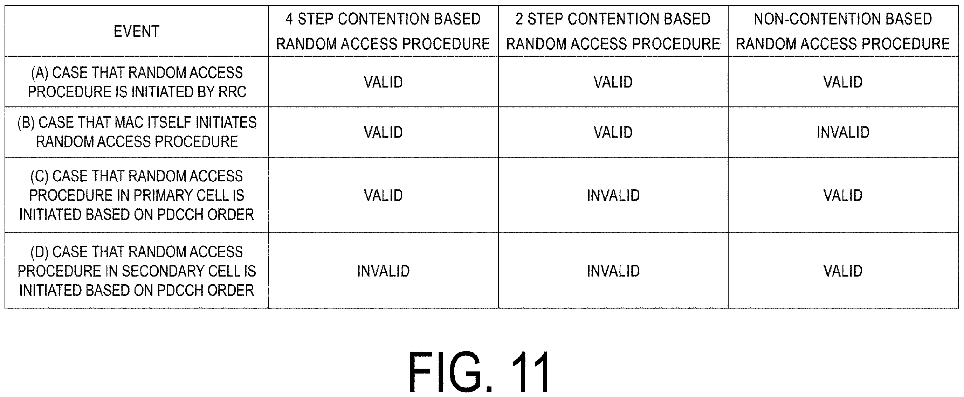

FIG. 11 is a diagram illustrating another example of the correspondence between the event and the form of the random access procedure according to the present embodiment. The random access procedure is initiated by (event A) RRC, (event B) MAC itself, or (event C) PDCCH order.

The random access procedure initiated by (event A) RRC may include the 4 step contention based random access procedure, the 2 step contention based random access procedure, and the non-contention based random access procedure.

The random access procedure initiated by (event B) MAC itself may include the 4 step contention based random access procedure and the 2 step contention based random access procedure. The random access procedure initiated by (event B) MAC itself may not include the non-contention based random access procedure.

The random access procedure initiated by the PDCCH order may include the 4 step contention based random access procedure and the non-contention based random access procedure. The random access procedure initiated by the PDCCH order may not include the 2 step contention based random access procedure.

The random access procedure initiated in the primary cell based on (event C) PDCCH order may include the 4 step contention based random access procedure and the non-contention based random access procedure. The random access procedure initiated in the primary cell based on (event C) PDCCH order may not include the 2 step contention based random access procedure.

The random access procedure initiated in the secondary cell based on (event D) PDCCH order may include the non-contention based random access procedure. The random access procedure initiated in the secondary cell based on (event D) PDCCH order may not include the 4 step contention based random access procedure and the 2 step contention based random access procedure.

In the first step of the 2 step contention based random access procedure, the resource for transmission of the random access preamble and the resource for the identifier of the terminal apparatus 1 may be time-multiplexed. The resource for transmission of the random access preamble and the resource for the identifier of the terminal apparatus 1 may be frequency-multiplexed. The data including the identifier of the terminal apparatus 1 in the first step of the 2 step contention based random access procedure are also referred to as a message X. The message X may be transmitted via an information bit and may be channel-coded. The resource for transmission of the random access preamble may be the PRACH resource. A resource for transmission of the message X may be the PUSCH resource.

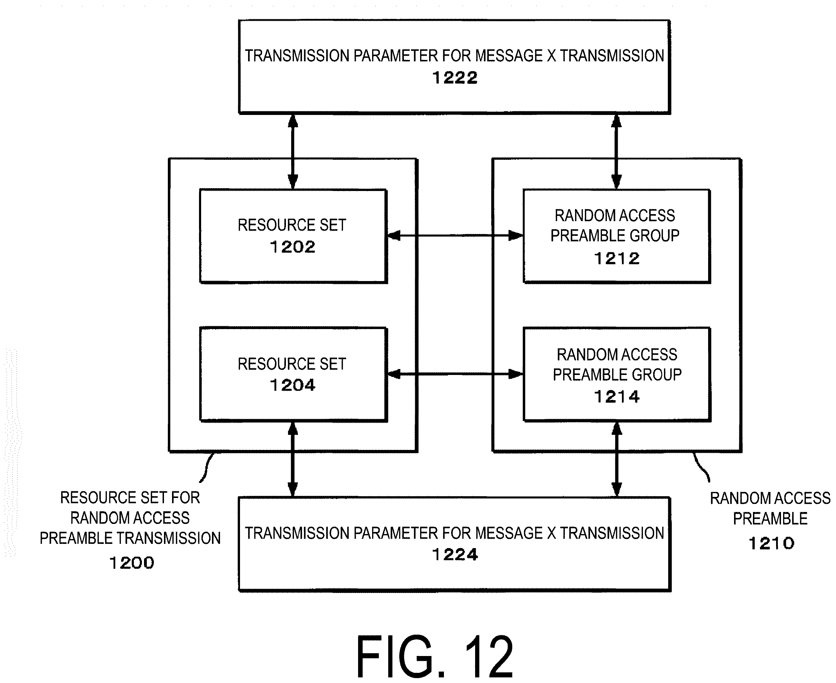

FIG. 12 is a diagram illustrating an example of a correspondence among a resource set for random access preamble transmission, a transmission parameter for message X transmission, and a random access preamble group in the 2 step contention based random access procedure according to the present embodiment. In the first step of the 2 step contention based random access procedure, the resource set for random access preamble transmission, the transmission parameter for message X transmission, and the random access preamble group may correspond to one another. In FIG. 12, a resource set 1202, a random access preamble group 1212, and a transmission parameter 1222 for message X transmission correspond to one another. In FIG. 12, a resource set 1204, a random access preamble group 1214, and a transmission parameter 1224 for message X transmission correspond to one another. In a case that the terminal apparatus 1 selects the resource set 1202, the terminal apparatus 1 selects a resource from among the resource set 1202, selects a random access preamble from among the random access preamble group 1212, transmits the selected random access preamble using the selected resource, and transmits the message X based on the transmission parameter 1222. The transmission parameter 1222 may include multiple transmission parameter sets. The terminal apparatus 1 may select one transmission parameter set from among the transmission parameter 1222. The transmission parameter is also referred to as scheduling information.

The base station apparatus may transmit information for indicating the resource set 1202, information for indicating the resource set 1204, information for indicating the random access preamble group 1212, information for indicating the random access preamble group 1214, information for indicating the transmission parameter 1222 for message X transmission, and information for indicating the transmission parameter 1224 for message X transmission. The information may be included in the PDCCH or the PDSCH. The information may be included in the downlink control information, the RRC signaling, the MAC CE, and/or the higher layer signaling. The resource set 1202 and the resource set 1204 may correspond to different cells.

The terminal apparatus 1 may select at which set, among multiple resource sets for random access preamble transmission, the random access procedure is initiated. For example, the terminal apparatus 1 may select one set from among multiple resource sets for random access preamble transmission based on a measurement using the downlink physical signal (synchronization signal and/or downlink reference signal). The measurement using the downlink physical signal may be a measurement of downlink path loss and/or downlink physical signal reception power. The downlink path loss may be calculated based on downlink physical signal transmit power and the downlink physical signal reception power.

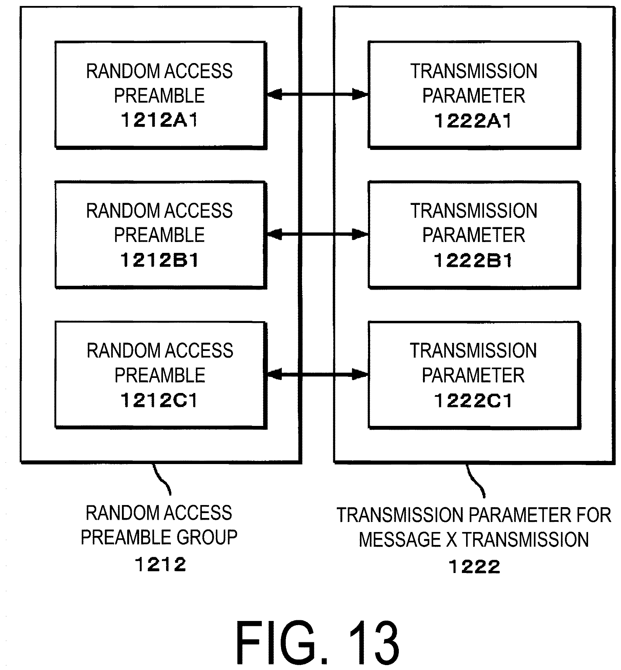

FIG. 13 is a diagram illustrating an example of a correspondence between the random access preamble and the transmission parameter for message X transmission in the 2 step contention based random access procedure according to the present embodiment. The random access preamble group 1212 may include random access preambles 1212A1, 1212B1, and 1212C1. The transmission parameter for message X transmission may include transmission parameters 1222A1, 1222B1, and 1222C1. The random access preamble 1212A1 corresponds to the transmission parameter 1222A1. The random access preamble 1212B1 corresponds to the transmission parameter 1222B1. The random access preamble 1212C1 corresponds to the transmission parameter 1222C1. The terminal apparatus 1 may select a set of a random access preamble and a transmission parameter. The terminal apparatus 1 may select a random access preamble from among the random access preamble group, and select a transmission parameter corresponding to the selected random access preamble. The terminal apparatus 1 may select a transmission parameter and select a random access preamble corresponding to the selected transmission parameter. The terminal apparatus 1 may randomly select the random access preamble from among the random access preamble group 1212. The terminal apparatus 1 may transmit the selected random access preamble using the selected resource, and may transmit the message X based on the selected transmission parameter.

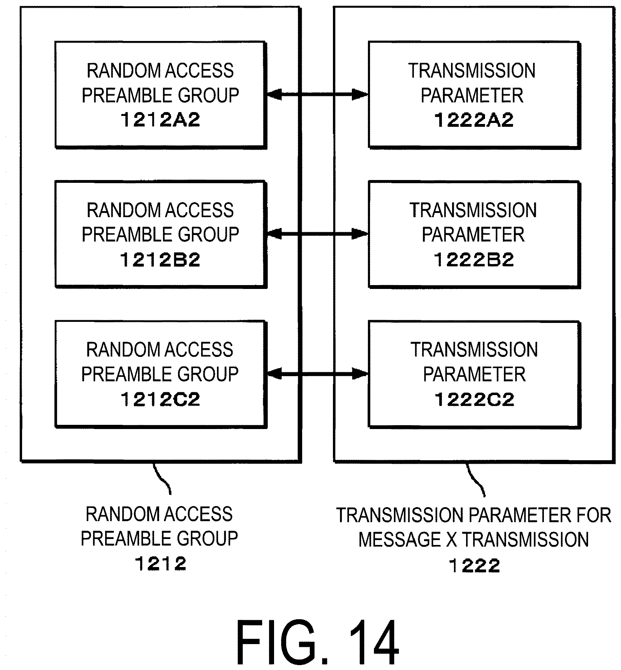

FIG. 14 is a diagram illustrating an example of a correspondence between the random access preamble group and the transmission parameter for message X transmission in the 2 step contention based random access procedure according to the present embodiment. The random access preamble group 1212 may include random access preamble groups 1212A2, 1212B2, and 1212C2. The transmission parameter 1222 for message X transmission may include transmission parameters 1222A2, 1222B2, and 1222C2. The random access preamble group 1212A2 corresponds to the transmission parameter 1222A2. The random access preamble group 1212B2 corresponds to the transmission parameter 1222B2. The random access preamble group 1212C2 corresponds to the transmission parameter 1222C2.

The terminal apparatus 1 may select a set of a random access preamble group and a transmission parameter. The terminal apparatus 1 may select a random access preamble and select a transmission parameter corresponding to a group to which the selected random access preamble belongs. The terminal apparatus 1 may randomly select the random access preamble from among the random access preamble group 1212. The terminal apparatus 1 may transmit the selected random access preamble using the selected resource, and may transmit the message X based on the selected transmission parameter.

The terminal apparatus 1 may select one group from among the multiple random access preamble groups {1212A2, 1212B2, 1212C2}, select a random access preamble from among the selected group, and selects a transmission parameter corresponding to the selected random access preamble. Here, the terminal apparatus 1 may randomly select the random access preamble from among the selected group. For example, the terminal apparatus 1 may select, based on the measurement using the downlink physical signal (synchronization signal and/or downlink reference signal), a size of the message X, a value A1 given by the information received from the base station apparatus 3, and/or a value A2 given by the information received from the base station apparatus 3, one group from among the multiple random access preamble groups {1212A2, 1212B2, 1212C2}. Based on whether or not the size of the message X is greater than the value A1 and/or whether or not the measurement result is greater than the value A2 using the downlink physical signal, the terminal apparatus 1 may select one group from among the multiple random access preamble groups {1212A2, 1212B2, 1212C2}. For example, in a case that the size of the message X is greater than the value A1 and the measurement result is smaller than the value A2 using the downlink physical signal, the terminal apparatus 1 may select the random access preamble group 1212A2. For example, in a case that the size of the message X is the same as or smaller than the value A1, or in a case that the measurement result is the same as or greater than the value A2 using the downlink physical signal, the terminal apparatus 1 may select the random access preamble group 1212B2.

Here, the value A2 may be given based on the value indicated by the information received from the base station apparatus 3 and/or the maximum transmit power value for the serving cell in which the terminal apparatus 1 performs the random access procedure. The value A1 and the value A2 may be configured individually for the random access preamble group 1212 and the random access preamble group 1214. The terminal apparatus 1 may individually configure a parameter for calculating the values A1 and A2 for the random access preamble group 1212 and a parameter for calculating the values A1 and A2 for the random access preamble group 1214. The base station apparatus 3 may transmit information indicating the multiple parameters.

The transmission parameter for message X transmission may include a parameter D1 relating to a modulation scheme, a parameter D2 relating to a resource, a parameter D3 relating to the size (the number of bits) of the message X, a parameter D4 relating to the initialization of a scrambling sequence used for scrambling of a coded bit or a modulation symbol of the message X, a parameter D5 relating to code spread of the message X, a parameter D6 relating to the DMRS associated with the transmission of the PUSCH including the message X, and/or a parameter D7 relating to the transmit power. The transmission parameters may include parameters other than the parameters D1 through D7.

The modulation scheme may include Quadrature Phase Shift Keying (QPSK) and Quadrature Amplitude Modulation (QAM). The parameter D2 relating to the resource may relate to a subframe, a transmission bandwidth, and/or a transmission frequency. The transmission bandwidth and the transmission frequency may be expressed by a physical resource block or a subcarrier. The size of the message X may be the number of information bits of the message X before coding. The scrambling sequence may be a pseudo-random sequence. The scrambling sequence may be given by a Gold sequence and/or one or multiple M sequences.

The terminal apparatus 1 generates the DMRS based on the parameter D6 relating to the DMRS. The DMRS is given based on a DMRS sequence $r_{PUSCH}$. The DMRS sequence $r_{PUSCH}$ is defined by Equation (3). Here, $r^{(\alpha)}$ is an RS sequence given by Equation (4). w is an orthogonal cover code. $e^x$ is an exponential function with a base of a Napier's constant e. j is an imaginary number. $\alpha$ is a cyclic shift. r' is a base sequence. $M_{RS\_SC}$ is a length of the base sequence r'. $M_{RS\_SC}$ may be the number of resource elements (subcarriers) to which the DMRS in one SC-FDMA symbol corresponds. The base sequence may be given based on the Zadoff-Chu sequence, the Gold sequence, and/or the M sequence.

Equation 3

$$r_{\text{PUSCH}}\left(m \cdot M_{RS\_sc} + n\right) = w\ (m) r^{(a)}(n), \quad m = 0,1 \quad 0 \le n < M_{RS\_sc}$$

Equation 4

$$r^{(a)}(n) = e^{jan} r'(n), \quad 0 \le n < M_{RS\_sc}$$

The parameter D6 relating to the DMRS may include a parameter used to determine the orthogonal cover code w, a parameter used to determine the cyclic shift $\alpha$, a parameter used to determine the base sequence r', a parameter used to determine the length $M_{RS\_SC}$ of the base sequence r', and/or a parameter used to determine the resource (resource element) to which the DMRS corresponds.

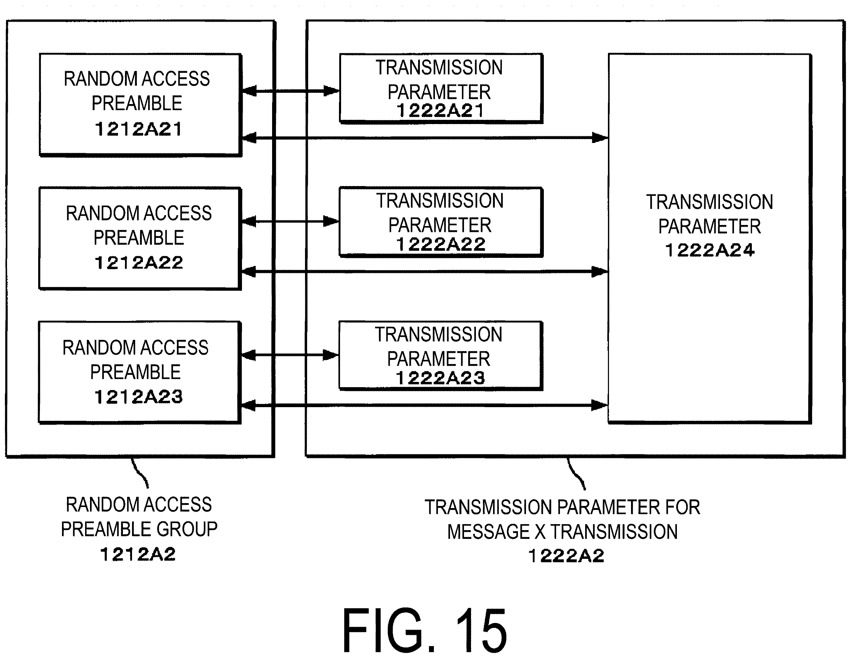

FIG. 15 is a diagram illustrating another example of the correspondence between the random access preamble and the transmission parameter for message X transmission in the 2 step contention based random access procedure according to the present embodiment. A random access preamble group 1212A may include random access preambles 1212A21, 1212A22, and 1212A23. The transmission parameter 1222A2 for message X transmission may include transmission parameters 1222A21, 1222A22, 1222A23, and 1222A24. The random access preamble 1212A21 corresponds to the transmission parameters 1222A21 and 1222A24. The random access preamble 1212A22 corresponds to the transmission parameters 1222A22 and 1222A24. The random access preamble 1212A23 corresponds to the transmission parameters 1222A23 and 1222A24. The transmission parameter 1222A24 may correspond to all random access preambles belonging to the group 1212A2.

The terminal apparatus 1 may select a random access preamble and select a transmission parameter corresponding to the selected random access preamble. The terminal apparatus 1 may randomly select the random access preamble from among the random access preamble group 1212A2. The terminal apparatus 1 may select the random access preamble 1212A21, and select the transmission parameter 1222A21 and the transmission parameter 1222A24 corresponding to the selected random access preamble 1212A21. The terminal apparatus 1 may transmit the selected random access preamble and transmit the message X based on the selected transmission parameter.

The transmission parameters 1222A21, 1222A22, and 1222A23 may include some of the parameters D1 through D6 described above, and the transmission parameters 1222A24 may include the remainder of the parameters D1 through D6 described above. For example, the transmission parameter 1222A21 may include the parameter D4 relating to the initialization of the scrambling sequence used for scrambling of the coded bit or the modulation symbol of the message X, the parameter D5 relating to code spread of the message X, the parameter D6 relating to the DMRS associated with the transmission of the PUSCH including the message X, and/or the parameter D7 relating to the transmit power. For example, the transmission parameter 1222A24 may include the parameter D1 relating to the modulation scheme, the parameter D2 relating to the resource, and/or the parameter D3 relating to the size (the number of bits) of the message X. The transmission parameters 1222A21, 1222A22, 1222A23, and 1222A24 may include parameters other than the parameters D1 to D7 described above.

The embodiment illustrated in FIG. 13 and FIG. 14 may be applied to the random access preamble group 1214 and the transmission parameter 1224. The embodiment described in FIG. 15 may be applied to the random access preamble groups 1212B2 and 1212C2 and the transmission parameters 1222B2 and 1222C2.

In the first step of the 2 step contention based random access procedure, information relating to the random access preamble may be transmitted together with the message X. The message X may include the information relating to the random access preamble. The information relating to the random access preamble may include (information A) information for indicating the index of the random access preamble, (information B) information indicating the resource for transmission of the random access preamble, and/or (information C) information relating to the sequence of the random access preamble. In the first step of the 2 step contention based random access procedure, the terminal apparatus 1 may transmit the random access preamble with an index 1 using the PRACH resource, and transmit the message X including the information A for indicating the index 1 of the random access preamble using the PUSCH. (Information C) information relating to the sequence of the random access preamble may indicate the physical root sequence index and/or the cyclic shift.

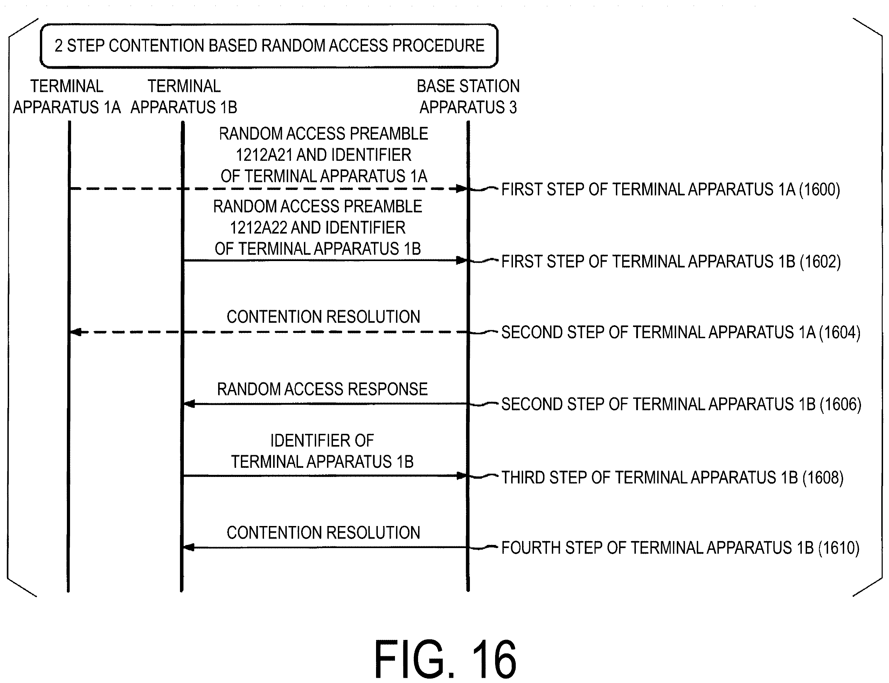

FIG. 16 is a diagram illustrating an example of the 2 step contention based random access procedure according to the present embodiment. In 1600 and 1602 in FIG. 16, a terminal apparatus 1A and a terminal apparatus 1B initiate the 2 step contention based random access procedure. The random access preamble 1212A21 selected by the terminal apparatus 1A differs from the random access preamble 1212A22 selected by the terminal apparatus 1B. However, the transmission parameter to which the random access preamble 1212A21 selected by the terminal apparatus 1A corresponds may be the same as the transmission parameter to which a random access preamble 1212A24 selected by the terminal apparatus 1B corresponds. The transmission parameter may be 1222A24.

In 1600, the terminal apparatus 1A transmits the random access preamble 1212A21. In 1600, the terminal apparatus 1A transmits, based on the transmission parameter 1222A24, the message X including the identifier of the terminal apparatus 1A and the index of the random access preamble 1222A21. In 1602, the terminal apparatus 1B transmits the random access preamble 1212A22. In 1602, the terminal apparatus 1B transmits, based on the transmission parameter 1222A24, the message X including the identifier of the terminal apparatus 1B and the index of the random access preamble 1222A21.

In a case that the random access preamble 1212A21 and the random access preamble 1212A22 are successfully detected, the message X transmitted by the terminal apparatus 1A is successfully received/detected, and the message transmitted by the terminal apparatus 1B is failed to be received/detected, the base station apparatus 3 transmits the contention resolution based on the identifier of the terminal apparatus 1A (1604), and transmits the random access response corresponding to the random access preamble 1212A22 (1606). The terminal apparatus 1B transmits, in a case of receiving the random access response, based on the uplink grant included in the random access response, the identifier of the terminal apparatus 1B using the PUSCH (1608). Next, the terminal apparatus 1B receives the contention resolution (1610). In a case that the message X transmitted by the terminal apparatus 1A includes the information indicating the index of the random access preamble 1212A21, the base station apparatus 3 may not transmit the random access response corresponding to the random access preamble 1212A21. Note that the information indicating the random access preamble may be expressed by the scrambling sequence used for scrambling of the coded bit or the modulation symbol of the message X, the code spread of the message X, and/or the DMRS associated with the transmission of the PUSCH including the message X.

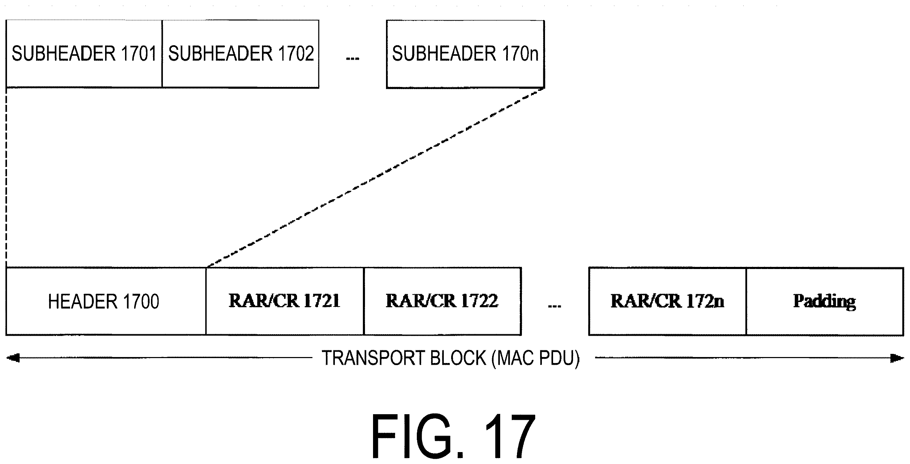

In 1604 and 1606 in FIG. 16, the random access response and the contention resolution may be included in the same PDSCH. In other words, in 1604 and 1606 in FIG. 16, a transport block including the random access response and the contention resolution may be transmitted using the PDSCH. For scheduling of the PDSCH, the DCI format having the CRC scrambled with the above-described RA-RNTI or the above-described X-RNTI added thereto may be used. FIG. 17 is a diagram illustrating an example of the transport block including the random access response and/or the contention resolution according to the present embodiment. In FIG. 17, the transport block includes a header 1700 and n RAR/CRs {1721, 1722, ..., 172n}. The RAR/CR is the random access response or the contention resolution. The header 1700 includes n subheaders {1701, 1702, ..., 170n}. Each header may correspond to each RAR/CR. For example, the subheader 1701 may correspond to the RAR/CR 1721.

Each of the subheaders {1701, 1702, ..., 170n} may include the random access preamble identifier indicating the index of the random access preamble. In a case that the subheader 1701 includes the random access preamble identifier indicating the index of the random access preamble transmitted in the first step of the 2 step contention based random access procedure, the terminal apparatus 1 may confirm the RAR/CR 1721 corresponding to the subheader 1701.

The subheader may include a flag to indicate that the RAR/CR to which the subheader corresponds includes the random access response. The subheader may include a flag to indicate that the RAR/CR to which the subheader corresponds includes the contention resolution resolution. The subheader may include a flag to indicate whether the RAR/CR to which the subheader corresponds includes the random access response or the contention resolution resolution. The terminal apparatus 1 may identify, based on the flag, whether the RAR/CR includes the random access response or the contention resolution resolution.

In a case that the flag included in the subheader indicates that the RAR/CR includes the contention resolution resolution, the subheader may not include the random access preamble identifier, and the subheader may include the information to indicate the index of the resource for transmission of the message X. In a case that the subheader 1701 includes the information indicating the index of the resource for transmission of the message X in the first step of the 2 step contention based random access procedure, the terminal apparatus 1 may confirm the RAR/CR 1721 corresponding to the subheader 1701. The index of the resource for transmission of the message X may be assigned to a frequency-time resource. Different indexes may be assigned to different resources corresponding to different transmission parameters.

The RAR/CR may include a flag to indicate that the RAR/CR includes the random access response. The RAR/CR may include a flag to indicate that the RAR/CR includes the contention resolution resolution. The RAR/CR may include a flag to indicate whether the RAR/CR includes the random access response or the contention resolution resolution. The terminal apparatus 1 may identify, based on the flag, whether the RAR/CR includes the random access response or the contention resolution resolution.

In a case that the random access preamble identifier included in the subheader is set to a prescribed value, the terminal apparatus 1 may determine that the RAR/CR to which the subheader corresponds includes the contention resolution resolution. The prescribed value may be 0. The prescribed value may be 1. The terminal apparatus 1 may determine, based on the value set in the field of the header included in the transport block, that the transport block includes the contention resolution resolution and/or the random access response.

In a certain cell, the random access preamble group corresponding to the 2 step contention based random access procedure may be the same as the random access preamble group corresponding to the 4 step contention based random access procedure. In a certain cell, the resource set for random access preamble transmission corresponding to the 2 step contention based random access procedure may be the same as the resource set for random access preamble transmission corresponding to the 4 step contention based random access procedure. For example, in FIG. 12, the resource sets 1202 and 1204 for random access preamble transmission and the random access preamble groups 1212 and 1214 may be used for transmission of the random access preamble corresponding to the 4 step contention based random access procedure. The method for selecting the random access preamble group by the terminal apparatus 1 illustrated in FIG. 14 may be applied to the 4 step contention based random access procedure.

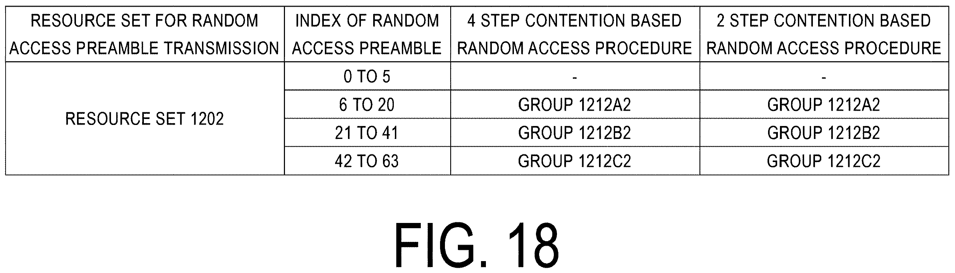

FIG. 18 is a diagram illustrating an example of the random access preamble group for the random access procedure according to the present embodiment. In FIG. 18, the configurations of the groups for the 4 step contention based random access procedure and the 2 step contention based random access procedure are the same. In FIG. 18, the group 1212A2 includes the random access preambles with indexes 6 to 20, the group 1212B2 includes the random access preambles with indexes 21 to 41, and the group 1212C2 includes the random access preambles with indexes 42 to 63. The terminal apparatus 1 may select one group from among the groups {1212A2, 1212B2, 1212C2} in the first step of the 4 step contention based random access procedure, and may select one group from among the groups {1212A2, 1212B2, 1212C2} in the first step of the 2 step contention based random access procedure.

FIG. 18 is a diagram illustrating an example of the random access preamble group for the random access procedure according to the present embodiment. In FIG. 18, the configuration of the group for the 4 step contention based random access procedure is the same as the configuration of the group for the 2 step contention based random access procedure. In FIG. 18, the group 1212A2 includes the random access preambles with indexes 6 to 20, the group 1212B2 includes the random access preambles with indexes 21 to 41, and the group 1212C2 includes the random access preambles with indexes 42 to 63. The terminal apparatus 1 may select one group from among the groups {1212A2, 1212B2, 1212C2} in the first step of the 4 step contention based random access procedure, and may select one group from among the groups {1212A2, 1212B2, 1212C2} in the first step of the 2 step contention based random access procedure.

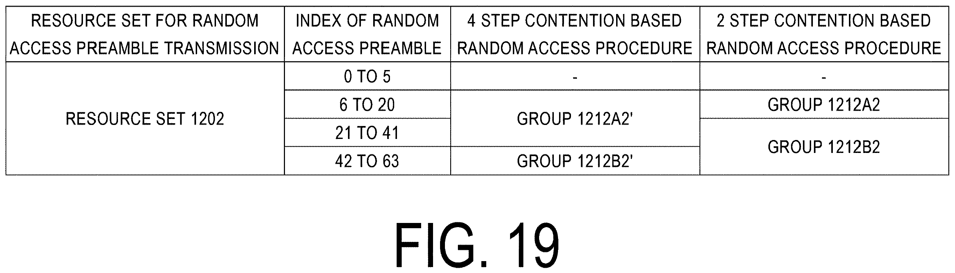

FIG. 19 is a diagram illustrating another example of the random access preamble group for the random access procedure according to the present embodiment. In FIG. 19, the configuration of the group for the 4 step contention based random access procedure is different from the configuration of the group for the 2 step contention based random access procedure. In FIG. 19, the group 1212A2 includes the random access preambles with indexes 6 to 20, the group 1212B2 includes the random access preambles with indexes 21 to 63, the group 1212A2' includes the random access preambles with indexes 6 to 41, and the group 1212B2' includes the random access preambles with indexes 42 to 63. The terminal apparatus 1 may select one group from among the groups {1212A2', 1212B2'} in the first step of the 4 step contention based random access procedure, and may select one group from among the groups {1212A2, 1212B2} in the first step of the 2 step contention based random access procedure.

The terminal apparatus 1 may select, based on the measurement using the downlink physical signal (synchronization signal and/or downlink reference signal), the size of the message X, the value A1 given by the information received from the base station apparatus 3, and/or the value A2 given by the information received from the base station apparatus 3, one group from among the multiple random access preamble groups {1212A2, 1212B2}. The terminal apparatus 1 may select, based on the measurement using the downlink physical signal (synchronization signal and/or downlink reference signal), the size of the message X, a value A3 given by the information received from the base station apparatus 3, and/or a value A4 given by the information received from the base station apparatus 3, one group from among the multiple random access preamble groups {1212A2, 1212B2}. Here, the value A1, the value A2, the value A3, and the value A4 may be individually configured. The base station apparatus 3 may transmit information used to determine the value A1, information used to determine the value A2, information used to determine the value A3, and information used to determine the value A4. Note that as the method for determining the group, the method illustrated in FIG. 14 may be used.

In FIG. 18 and FIG. 19, the random access preambles with the indexes 0 to 5 may be used in the non-contention based random access procedure.

Various aspects of the terminal apparatus 1 or the like according to the present embodiment will be described below.

(1) A first aspect of the present embodiment is a terminal apparatus, the terminal apparatus includes: a higher layer processing unit configured to control a 2 step-random access procedure; and a transmitter configured to transmit, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and
Information C relating to a sequence of the random access preamble.

(2) A second aspect of the present embodiment is a base station apparatus, the base station apparatus includes: a higher layer processing unit configured to control a 2 step-random access procedure; and a receiver configured to receive, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and
Information C relating to a sequence of the random access preamble.

(3) A third aspect of the present embodiment is a communication method used for a terminal apparatus, the communication method includes the steps of: controlling a 2 step-random access procedure; and transmitting, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and
Information C relating to a sequence of the random access preamble.

(4) A fourth aspect of the present embodiment is a terminal apparatus, and a communication method used for a base station apparatus, the communication method includes the steps of: controlling a 2 step-random access procedure; and receiving, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and
Information C relating to a sequence of the random access preamble.

(5) A fifth aspect of the present embodiment is a terminal apparatus 1, the terminal apparatus 1 includes: a higher layer processing unit 14 configured to perform a random access procedure; and a receiver 10 configured to receive a physical channel (PDCCH order), in which the random access procedure includes a 2 step contention based random access procedure, a 4 step contention based random access procedure, and a non-contention based random access procedure, the physical channel indicates an initiation of any of the 4 step-contention based random access procedure and the non-contention based random access procedure, and the higher layer processing unit initiates, based on the physical channel, any of the 4 step contention based random access procedure and the non-contention based random access procedure.

(6) In the fifth aspect of the present embodiment, the higher layer processing unit 14 may initiate, for initial access and RRC connection re-establishment, any of the 2 step contention based random access procedure and the 4 step contention based random access procedure.

(7) In the fifth aspect of the present embodiment, the higher layer processing unit 14 may initiate, for a handover, any of the 2 step contention based random access procedure, the 4 step contention based random access procedure, and the non-contention based random access procedure.

(8) In the fifth aspect of the present embodiment, in a case that the MAC layer initiates the random access procedure, the higher layer processing unit 14 may initiate any of the 2 step contention based random access procedure and the 4 step contention based random access procedure.

(9) In the fifth aspect of the present embodiment, in a case that the physical channel indicates an initiation of the random access procedure in a secondary cell belonging to a secondary TAG, the physical channel may indicate an initiation of the non-contention based random access procedure.

(10) A sixth aspect of the present embodiment is a terminal apparatus 1, the terminal apparatus 1 includes: a higher layer processing unit 14 configured to control a 2 step-random access procedure; and a transmitter 10 configured to transmit, as a first step of the 2 step-random access procedure, a random access preamble and data, in which the data include information relating to the random access preamble, and the information relating to the random access preamble includes some or all of following information A to information C:

Information A for indicating an index of the random access preamble,
Information B for indicating a resource for transmission of the random access preamble, and
Information C relating to a sequence of the random access preamble.

(11) A seventh aspect of the present embodiment is a base station apparatus 3, the base station apparatus 3 includes: a higher layer processing unit 34 configured to control a 2 step-random access procedure; and a receiver 30 configured to receive, as a first step of the 2 step-random access procedure, a random access preamble and data, in which the data include information relating to the random access preamble.

The information relating to the random access preamble includes some or all of following information A to information C:

Information A for indicating an index of the random access preamble,
Information B for indicating a resource for transmission of the random access preamble, and
Information C relating to a sequence of the random access preamble.

(10) An eighth aspect of the present embodiment is a terminal apparatus 1, the terminal apparatus 1 includes: a higher layer processing unit 14 configured to control a 2 step-random access procedure; and a transmitter 10 configured to transmit, as a first step of the 2 step-random access procedure, a random access preamble and data, in which one or both of (1) a parameter relating to initialization of a scrambling sequence used for scrambling of a physical channel including the data and (2) a parameter used for generation of a demodulation reference signal (DMRS) associated with the physical channel including the data are determined based on one or both of (3) an index of the random access preamble and (4) a resource for transmission of the random access preamble.

(11) An ninth aspect of the present embodiment is a base station apparatus 3, the base station apparatus 3 includes: a higher layer processing unit 34 configured to control a 2 step-random access procedure; and a receiver 30 configured to receive, as a first step of the 2 step-random access procedure, a random access preamble and data, in which one or both of (1) a scrambling sequence used for scrambling of a physical channel including the data and (2) a parameter used for generation of a demodulation reference signal associated with the physical channel including the data are determined based on one or both of (3) an index of the random access preamble and (4) a resource for transmission of the random access preamble.

(12) A tenth aspect of the present embodiment is a terminal apparatus 1, the terminal apparatus 1 includes: a higher layer processing unit 14 configured to control a 2 step-random access procedure; and a transmitter 10 configured to transmit, as a first step of the 2 step-random access procedure, a random access preamble and data, in which the higher layer processing unit 14 (1) selects any one group among a plurality of groups of random access preambles, (2) selects the random access preamble from the group being selected, and (3) selects a transmission parameter corresponding to the group being selected from among a plurality of transmission parameters, and transmission of the data is based on the transmission parameter being selected.

In the sixth to tenth aspects of the present embodiment, the data may be a message X. In the seventh and eighth aspects of the present embodiment, the parameter relating to the initialization of the scrambling sequence used for scrambling of the physical channel including the data may be the parameter D4 relating to the initialization of the scrambling sequence used for scrambling of the coded bit or the modulation symbol of the message X. In the seventh and eighth aspects of the present embodiment, the parameter used for generation of the demodulation reference signal associated with the physical channel including the data may be the parameter D6 relating to the DMRS associated with the transmission of the PUSCH including the message X. In the eleventh aspect of the present embodiment, the transmission parameter may include the above-described parameters D1 to D7, and may include a parameter other than the parameters D1 to D7.

According to this configuration, the terminal apparatus and the base station apparatus can mutually efficiently perform the random access procedure.

The base station apparatus 3 according to one aspect of the present invention can also be realized as an aggregation (an apparatus group) including multiple apparatuses. Each of the apparatuses configuring such an apparatus group may include some or all portions of each function or each functional block of the base station apparatus 3 according to the above-described embodiment. The apparatus group may include each general function or each functional block of the base station apparatus 3. Furthermore, the terminal apparatus 1 according to the above-described embodiment can also communicate with the base station apparatus as the aggregation.

Furthermore, the base station apparatus 3 according to the above-described embodiment may serve as an Evolved Universal Terrestrial Radio Access Network (EUTRAN). Furthermore, the base station apparatus 3 according to the above-described embodiment may have some or all portions of the functions of a node higher than an eNodeB.

A program running on an apparatus according to one aspect of the present invention may serve as a program that controls a Central Processing Unit (CPU) and the like to cause a computer to operate in such a manner as to realize the functions of the above-described embodiment according to one aspect of the present invention. Programs or the information handled by the programs are temporarily read into a volatile memory, such as a Random Access Memory (RAM) while being processed, or stored in a non-volatile memory, such as a flash memory, or a Hard Disk Drive (HDD), and then read by the CPU to be modified or rewritten, as necessary.

Moreover, the apparatuses in the above-described embodiment may be partially enabled by a computer. In such a case, a program for realizing such control functions may be recorded on a computer-readable recording medium to cause a computer system to read the program recorded on the recording medium for execution. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the above-described program may be configured to realize some of the functions described above, and additionally may be configured to realize the functions described above, in combination with a program already recorded in the computer system.

Furthermore, each functional block or various characteristics of the apparatuses used in the above-described embodiment may be implemented or performed on an electric circuit, that is, typically an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor, or the processor may be a processor of known type, a controller, a micro-controller, or a state machine instead. The general-purpose processor or the above-mentioned circuits may be constituted of a digital circuit, or may be constituted of an analog circuit. Furthermore, in a case that with advances in semiconductor technology, a circuit integration technology appears that replaces the present integrated circuits, it is also possible to use an integrated circuit based on the technology.

Note that the invention of the present patent application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

Industrial Applicability

An aspect of the present invention can be utilized, for example, in a communication system, communication equipment (for example, a cellular phone apparatus, a base station apparatus, a radio LAN apparatus, or a sensor device), an integrated circuit (for example, a communication chip), or a program.

Reference Signs List

1 (1A, 1B, 1C) Terminal apparatus
3 Base station apparatus
10 Radio transmission and/or reception unit
11 Antenna unit
12 RF unit
13 Baseband unit
14 Higher layer processing unit
15 Medium access control layer processing unit
16 Radio resource control layer processing unit
30 Radio transmission and/or reception unit
31 Antenna unit
32 RF unit
33 Baseband unit
34 Higher layer processing unit
35 Medium access control layer processing unit
36 Radio resource control layer processing unit

**Claims**

1.   A terminal apparatus comprising:

a higher layer processing unit configured to control a 2 step-random access procedure; and
a transmitter configured to transmit, as a first step of the 2 step-random access procedure, a random access preamble and data,
wherein the data include information relating to the random access preamble, and
the information relating to the random access preamble includes some or all of following information A to information C:

information A for indicating an index of the random access preamble,
information B for indicating a resource for transmission of the random access preamble, and
information C relating to a sequence of the random access preamble.

2.   A base station apparatus comprising:

a higher layer processing unit configured to control a 2 step-random access procedure; and
a receiver configured to receive, as a first step of the 2 step-random access procedure, a random access preamble and data,
wherein the data include information relating to the random access preamble, and
the information relating to the random access preamble includes some or all of following information A to information C:

information A for indicating an index of the random access preamble,
information B for indicating a resource for transmission of the random access preamble, and
information C relating to a sequence of the random access preamble.

3.  A communication method used for a terminal apparatus, the communication method comprising the steps of:

controlling a 2 step-random access procedure; and
transmitting, as a first step of the 2 step-random access procedure, a random access preamble and data,
wherein the data include information relating to the random access preamble, and
the information relating to the random access preamble includes some or all of following information A to
information C:

information A for indicating an index of the random access preamble,
information B for indicating a resource for transmission of the random access preamble, and
information C relating to a sequence of the random access preamble.

4.  A communication method used for a base station apparatus, the communication method comprising the steps of:

controlling a 2 step-random access procedure; and
receiving, as a first step of the 2 step-random access procedure, a random access preamble and data,
wherein the data include information relating to the random access preamble, and
the information relating to the random access preamble includes some or all of following information A to
information C:

information A for indicating an index of the random access preamble,
information B for indicating a resource for transmission of the random access preamble, and
information C relating to a sequence of the random access preamble.

FIG. 1

TIME

RADIO FRAME 10 ms

SUBFRAME 1 ms

SLOT 0.5ms

| SUBFRAME #0 | SUBFRAME #1 | SUBFRAME #2 | SUBFRAME #3 | SUBFRAME #4 | SUBFRAME #5 | SUBFRAME #6 | SUBFRAME #7 | SUBFRAME #8 | SUBFRAME #9 |
|---|---|---|---|---|---|---|---|---|---|

# FIG. 2

EP 3 573 411 A1

FIG. 3

ANTENNA UNIT

11

RF UNIT

12

BASEBAND UNIT

RADIO TRANSMISSION AND/OR RECEPTION UNIT
(PHYSICAL LAYER PROCESSING UNIT)

13

10

| MEDIUM ACCESS CONTROL LAYER PROCESSING UNIT | TRANSMIT POWER CONTROL UNIT | RADIO RESOURCE CONTROL LAYER PROCESSING UNIT |

15

17

16

14

HIGHER LAYER PROCESSING UNIT

TERMINAL APPARATUS

1

# FIG. 4

ANTENNA UNIT

·  ·  ·

31

RF UNIT

32

30

BASEBAND UNIT

RADIO TRANSMISSION AND/OR RECEPTION UNIT
(PHYSICAL LAYER PROCESSING UNIT)

33

| MEDIUM ACCESS CONTROL LAYER PROCESSING UNIT | RADIO RESOURCE CONTROL LAYER PROCESSING UNIT |

34

35

36

HIGHER LAYER PROCESSING UNIT

BASE STATION APPARATUS

3

HIGHER NODE AND ANOTHER BASE STATION APPARATUS

# FIG. 5

**FIG. 6**

2 STEP CONTENTION BASED
RANDOM ACCESS PROCEDURE

TERMINAL
APPARATUS 1

BASE STATION
APPARATUS 3

RANDOM ACCESS PREAMBLE AND
IDENTIFIER OF TERMINAL APPARATUS 1

FIRST STEP (700)

CONTENTION RESOLUTION

SECOND STEP (702)

FIG. 7

MODIFICATION OF 2 STEP CONTENTION BASED RANDOM ACCESS PROCEDURE

TERMINAL APPARATUS 1

BASE STATION APPARATUS 3

RANDOM ACCESS PREAMBLE AND IDENTIFIER OF TERMINAL APPARATUS 1 — FIRST STEP (800)

RANDOM ACCESS RESPONSE — SECOND STEP (802)

IDENTIFIER OF TERMINAL APPARATUS 1 — THIRD STEP (804)

CONTENTION RESOLUTION — FOURTH STEP (806)

# FIG. 8

NON-CONTENTION BASED
RANDOM ACCESS PROCEDURE

TERMINAL
APPARATUS 1

BASE STATION
APPARATUS 3

ALLOCATION OF
RANDOM ACCESS PREAMBLE

ZEROTH STEP (900)

RANDOM ACCESS PREAMBLE

FIRST STEP (902)

RANDOM ACCESS RESPONSE

SECOND STEP (904)

FIG. 9

| EVENT | 4 STEP CONTENTION BASED RANDOM ACCESS PROCEDURE | 2 STEP CONTENTION BASED RANDOM ACCESS PROCEDURE | NON-CONTENTION BASED RANDOM ACCESS PROCEDURE |
|---|---|---|---|
| (i) INITIAL ACCESS | VALID | VALID | INVALID |
| (ii) RRC CONNECTION RE-ESTABLISHMENT | VALID | VALID | INVALID |
| (iii) HANDOVER | VALID | VALID | VALID |
| (iv) DOWNLINK DATA ARRIVAL | VALID | INVALID | VALID |
| (v) UPLINK DATA ARRIVAL | VALID | VALID | INVALID |
| (vi) TIME ADJUSTMENT FOR sTAG | INVALID | INVALID | VALID |

# FIG. 10

| EVENT | 4 STEP CONTENTION BASED RANDOM ACCESS PROCEDURE | 2 STEP CONTENTION BASED RANDOM ACCESS PROCEDURE | NON-CONTENTION BASED RANDOM ACCESS PROCEDURE |
|---|---|---|---|
| (A) CASE THAT RANDOM ACCESS PROCEDURE IS INITIATED BY RRC | VALID | VALID | VALID |
| (B) CASE THAT MAC ITSELF INITIATES RANDOM ACCESS PROCEDURE | VALID | VALID | INVALID |
| (C) CASE THAT RANDOM ACCESS PROCEDURE IN PRIMARY CELL IS INITIATED BASED ON PDCCH ORDER | VALID | INVALID | VALID |
| (D) CASE THAT RANDOM ACCESS PROCEDURE IN SECONDARY CELL IS INITIATED BASED ON PDCCH ORDER | INVALID | INVALID | VALID |

# FIG. 11

EP 3 573 411 A1

TRANSMISSION PARAMETER FOR MESSAGE X TRANSMISSION
**1222**

RESOURCE SET
**1202**

RANDOM ACCESS
PREAMBLE GROUP
**1212**

RESOURCE SET
**1204**

RANDOM ACCESS
PREAMBLE GROUP
**1214**

RESOURCE SET FOR
RANDOM ACCESS
PREAMBLE TRANSMISSION
**1200**

TRANSMISSION PARAMETER FOR MESSAGE X TRANSMISSION
**1224**

RANDOM ACCESS
PREAMBLE
**1210**

# FIG. 12

RANDOM ACCESS
PREAMBLE
**1212A1**

TRANSMISSION
PARAMETER
**1222A1**

RANDOM ACCESS
PREAMBLE
**1212B1**

TRANSMISSION
PARAMETER
**1222B1**

RANDOM ACCESS
PREAMBLE
**1212C1**

TRANSMISSION
PARAMETER
**1222C1**

RANDOM ACCESS
PREAMBLE GROUP
**1212**

TRANSMISSION PARAMETER FOR
MESSAGE X TRANSMISSION
**1222**

# FIG. 13

RANDOM ACCESS
PREAMBLE GROUP
1212A2

TRANSMISSION
PARAMETER
1222A2

RANDOM ACCESS
PREAMBLE GROUP
1212B2

TRANSMISSION
PARAMETER
1222B2

RANDOM ACCESS
PREAMBLE GROUP
1212C2

TRANSMISSION
PARAMETER
1222C2

RANDOM ACCESS
PREAMBLE GROUP
1212

TRANSMISSION PARAMETER FOR
MESSAGE X TRANSMISSION
1222

FIG. 14

FIG. 15

## 2 STEP CONTENTION BASED RANDOM ACCESS PROCEDURE

TERMINAL APPARATUS 1A  TERMINAL APPARATUS 1B  BASE STATION APPARATUS 3

RANDOM ACCESS PREAMBLE 1212A21 AND IDENTIFIER OF TERMINAL APPARATUS 1A
FIRST STEP OF TERMINAL APPARATUS 1A (1600)

RANDOM ACCESS PREAMBLE 1212A22 AND IDENTIFIER OF TERMINAL APPARATUS 1B
FIRST STEP OF TERMINAL APPARATUS 1B (1602)

CONTENTION RESOLUTION
SECOND STEP OF TERMINAL APPARATUS 1A (1604)

RANDOM ACCESS RESPONSE
SECOND STEP OF TERMINAL APPARATUS 1B (1606)

IDENTIFIER OF TERMINAL APPARATUS 1B
THIRD STEP OF TERMINAL APPARATUS 1B (1608)

CONTENTION RESOLUTION
FOURTH STEP OF TERMINAL APPARATUS 1B (1610)

## FIG. 16

EP 3 573 411 A1

| | | | |
|---|---|---|---|
| SUBHEADER 1701 | SUBHEADER 1702 | ... | SUBHEADER 170n |

| | | | | |
|---|---|---|---|---|
| HEADER 1700 | RAR/CR 1721 | RAR/CR 1722 | ... | RAR/CR 172n | Padding |

← ———————————— TRANSPORT BLOCK (MAC PDU) ———————————— →

# FIG. 17

EP 3 573 411 A1

| RESOURCE SET FOR RANDOM ACCESS PREAMBLE TRANSMISSION | INDEX OF RANDOM ACCESS PREAMBLE | 4 STEP CONTENTION BASED RANDOM ACCESS PROCEDURE | 2 STEP CONTENTION BASED RANDOM ACCESS PROCEDURE |
|---|---|---|---|
| RESOURCE SET 1202 | 0 TO 5 | - | - |
| | 6 TO 20 | GROUP 1212A2 | GROUP 1212A2 |
| | 21 TO 41 | GROUP 1212B2 | GROUP 1212B2 |
| | 42 TO 63 | GROUP 1212C2 | GROUP 1212C2 |

# FIG. 18

| RESOURCE SET FOR RANDOM ACCESS PREAMBLE TRANSMISSION | INDEX OF RANDOM ACCESS PREAMBLE | 4 STEP CONTENTION BASED RANDOM ACCESS PROCEDURE | 2 STEP CONTENTION BASED RANDOM ACCESS PROCEDURE |
|---|---|---|---|
| RESOURCE SET 1202 | 0 TO 5 | - | - |
| | 6 TO 20 | GROUP 1212A2' | GROUP 1212A2 |
| | 21 TO 41 | | GROUP 1212B2 |
| | 42 TO 63 | GROUP 1212B2' | |

# FIG. 19

EP 3 573 411 A1

## INTERNATIONAL SEARCH REPORT

International application No.

PCT/JP2018/001629

### A. CLASSIFICATION OF SUBJECT MATTER
Int.Cl. H04W74/08(2009.01)i, H04W72/04(2009.01)i

According to International Patent Classification (IPC) or to both national classification and IPC

### B. FIELDS SEARCHED

Minimum documentation searched (classification system followed by classification symbols)
Int.Cl. H04W4/00-99/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | CATT, Further consideration on a 2-step RA procedure, 3GPP TSG RAN WG1 AH_NR Meeting R1-1700186, 10 January 2017, pp 1, 2 | 1-4 |
| Y | HUAWEI, CR on TDD PRACH resource selection, 3GPP TSG-RAN WG2 Meeting #64 R2-086352, 3GPP, 03 November 2008, p. 1 | 1-4 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14.03.2018 | 03.04.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 573 411 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017008710 A

**Non-patent literature cited in the description**

- *3GPP TS 36.211 V13.0.0 (2015-12),* 06 January 2016
- *3GPP TS 36.212 V13.0.0 (2015-12),* 06 January 2016
- *3GPP TS 36.213 V13.0.0 (2015-12),* 06 January 2016
- *3GPP TS 36.321 V13.0.0 (2015-12),* 14 January 2016
- *3GPP TS 36.331 V13.0.0 (2015-12),* 07 January 2016
- Motivation for new SI proposal: Enhancements to initial access and scheduling for low-latency LTE. *RP-162295,* 05 December 2016